# EUROPÄISCHE PATENTSCHRIFT

(11) **EP 4 229 323 B1**
(45) Veröffentlichungstag und Bekanntmachung des Hinweises auf die Patenterteilung: **16.04.2025**
(21) Anmeldenummer: 21793886.9
(22) Anmeldetag: 11.10.2021
(51) Int. Cl.: F16L 37/088, F16L 37/14, F01N 13/18

(54) **ELASTISCHER STECKVERBINDER**
ELASTIC PLUG-IN CONNECTOR
RACCORD EMBOITABLE ÉLASTIQUE

(30) Priorität: 13.10.2020 DE 102020126814
(43) Veröffentlichungstag der Anmeldung: 23.08.2023
(73) Patentinhaber: Voss Automotive GmbH, 51688 Wipperfürth (DE)
(72) Erfinder: OBERDÖRFER, Alexander, 42477 Radevormwald (DE); AHOURI, Mustapha, 58507 Lüdenscheid (DE)
(74) Vertreter: Dr. Solf & Zapf Patent- und Rechtsanwalts PartG mbB
(86) Internationale Anmeldenummer: PCT/EP2021/078011
(87) Internationale Veröffentlichungsnummer: WO 2022/078941

(56) Entgegenhaltungen:
- EP-A2- 3 270 028
- DE-A1- 102014 107 530
- DE-A1- 102016 109 051

## Beschreibung

Die Erfindung betrifft einen Steckverbinder zur Herstellung von Schlauch- und/oder Rohrverbindungen. Der Steckverbinder weist einen Grundkörper und einen Aufnahmekörper auf. Der Grundkörper und der Aufnahmekörper weisen jeweils einen Einsteckkanal für ein in eine Einsteckrichtung zu montierendes Steckerteil auf. Weiterhin weist der Steckverbinder ein Halteteil auf, welches in einer Aufnahmeöffnung des Aufnahmekörpers angeordnet ist und in einer Riegelstellung das zu montierende Steckerteil entgegen der Einsteckrichtung blockiert. Weiterhin ist der Aufnahmekörper mit dem Grundkörper verbunden, wobei das Halteteil eine gegen die Einsteckrichtung weisende Anschlagfläche aufweist. Die Aufnahmeöffnung weist weiterhin eine in Einsteckrichtung weisende Anlagefläche auf, wobei die Anschlagfläche bei einer Verschiebung des Halteteils entgegen der Einsteckrichtung gegen die Anlagefläche des Aufnahmeteils wirkt. Der Aufnahmekörper ist derart elastisch verformbar ausgebildet, dass die Anlagefläche zumindest innerhalb eines Verschiebebereichs entgegen der Einsteckrichtung elastisch verschiebbar ist.

Steckverbinder dieser Art sind unter anderem als "VOSS Stecksystem 241" auf dem Markt befindlich und insbesondere unter den Namen "SV241N / NSL" bekannt. Dabei wird, meist in einem Vormontageprozess, das Halteteil in die Aufnahmeöffnung des Aufnahmekörpers gesteckt und der Aufnahmekörper in dem Einsteckkanal des Grundkörpers montiert. Nach der Montage, d. h. nach dem Einstecken des zu montierenden Steckerteils in die Einsteckkanäle des Aufnahmekörpers und des Grundkörpers, blockiert das Halteteil zumindest formschlüssig ein Trennen des Steckerteils gegen die Einsteckrichtung aus dem Einsteckkanal des Aufnahmekörpers und des Grundkörpers.

Bei dem Steckerteil kann es sich insbesondere um einen nach der Norm SAE J 2044 ausgebildeten, so genannten Male-Stecker handeln. Dabei greift das Halteteil hinter einen in der SAE-Steckerkontur ausgebildeten Ringbund und blockiert diesen formschlüssig entgegen der Einsteckrichtung.

Derartige Systeme werden unter anderem in der Kraftfahrzeugtechnik verwendet. Insbesondere ist der Einsatz dieser Systeme für Kraftstoffsysteme und "Selective catalytic reduction", nachfolgend SCR-Systeme genannt, zur Reduktion von Stickoxiden in Abgasen geeignet.

SCR-Systeme können in bekannter Art sowohl beheizt als auch unbeheizt ausgeführt werden. In den Leitungen von SCR-Systemen wird in der Regel eine 32,5- prozentige wässrige Harnstofflösung geführt, auch als AdBlue bekannt. Die Zusammensetzung ist in der DIN 70070 bzw. ISO 22241-1 geregelt. Dabei ist es allgemein bekannt, dass besagte wässrige Harnstofflösungen bei Temperaturen im Bereich von -8 °C bis -11 °C gefrieren und sich dabei ausdehnen. Dies kann zu einem Versagen des Stecksystems führen.

Ein gattungsgemäßer Steckverbinder ist aus der DE 10 2016 109 051 A1 bekannt. Konstruktionsbedingt ist dieser Steckverbinder derart ausgelegt, dass hohe Drücke im Leitungssystem bzw. Kräfte auf das Steckerteil wirken und dieses wiederum entgegen der Einsteckrichtung gegen das Halteelement pressen. Durch die Anordnung des Halteelements in der Aufnahmeöffnung des Aufnahmekörpers wird die Kraft, welche von dem Steckerteil auf das Halteelement wirkt, über die Anschlagfläche des Halteelements auf die Anlagefläche der Aufnahmeöffnung übertragen.

Aus der EP 3 270 028 A2 ist ein Steckverbinder bekannt, bei dem der Aufnahmekörper einen Verbindungsansatz aufweist, welcher an einer Außengeometrie frei ragende, radial federelastische, axial gerichtete Rastarme aufweist. Die Rastarme des Aufnahmekörpers stehen dabei in Wirkverbindung mit dem Grundkörper, so dass der Aufnahmekörper im Grundkörper rastend fixiert wird.

In der DE 10 2014 107 530 A1 ist ein Aufnahmeteil für eine Fluid-Steckkupplung beschrieben, welches ein Muffenteil aufweist, das eine Aufnahmeöffnung für ein in einer axialen Einsteckrichtung in das Muffenteil einsteckbares Steckerteil aufweist, und mit einem aufspreizbaren Halteteil, mittels dessen das Steckerteil über eine Haltestufe des Steckerteiles rastend gegen ein Lösen aus dem Muffenteil arretierbar ist, wobei das Halteteil mindestens einen radial federelastisch aufspreizbaren Haltearm zum rastenden Hintergreifen der Haltestufe des Steckerteils aufweist. Auch eine Fluid-Steckkupplung mit einem Steckerteil und mit einem derartigen Aufnahmeteil ist beschrieben. Hierbei ist vorgesehen dass das Halteteil das Muffenteil mit einem ringförmig ausgebildeten Kopfbereich stirnseitig übergreift, wobei das Halteteil mindestens einen in einem Außenmantelbereich liegenden, von dem Kopfbereich in Richtung auf das Muffenteil hin axial abstehenden, radial federelastisch aufspreizbaren Schnapparm zum rastenden Hintergreifen einer auf dem Außenumfang des Muffenteils liegenden Raststufe aufweist, der konzentrisch mit dem radial federelastisch aufspreizbaren Haltearm zum rastenden Hintergreifen der Haltestufe des Steckerteils liegt, welcher in einem Innenmantelbereich des Halteteils angeordnet ist.

Die aus der DE 10 2016 109 051 A1, der EP 3 270 028 A2 und der DE 10 2014 107 530 A1 bekannten Steckverbinder haben sich in der Praxis vorteilhaft bewährt. Insbesondere die konstruktive Ausbildung der Halteklammer mit zwei Paaren von Federarmen ist dabei für die Montage und Einbausicherheit von großem Vorteil.

Bei Steckverbindern der bekannten Art kann insbesondere allerdings ein Spalt zwischen einem in Einsteckrichtung gesehen hintersten Ende des Steckerteils und einer diesem Ende gegenüberliegenden Wandung des Grundkörpers entstehen, wobei dieser Spalt als Übersteckraum für die Montage des Steckerteils im Steckverbinder bevorzugt auch als wesentlich anzusehen ist. Dieser Spalt ist im Betrieb mit dem Medium des Fluidsystems gefüllt, insbesondere mit der flüssigen Harnstofflösung. Bei hohen Betriebsdrücken bzw. wenn das Medium gefriert, wirkt eine Kraft entgegen der Einsteckrichtung auf das Ende des Steckerteils und verschiebt diesen dadurch entgegen der Einsteckrichtung. Hierbei wird das Steckerteil mit seinem Ringbund gegen das Halteteil gepresst, welches wiederum die Kraft auf den Aufnahmekörper, insbesondere wie zur DE 10 2016 109 051 A1 erläutert, überträgt. Insbesondere bei kalten Temperaturen ist die Elastizität des Aufnahmekörpers nur in einem reduzierten Ausmaß gegeben, so dass die auf den Aufnahmekörper übertragene Kraft den elastischen Bereich des Aufnahmekörpers übersteigt, auch dann, wenn möglicherweise in Kraftwirkungsrichtung dahinter liegende Teile ebenfalls mehr oder weniger elastisch und/oder plastisch deformiert werden sollten und dadurch in Mitleidenschaft gezogen werden könnten. Insbesondere plastische Verformungen und Materialversagen sind eine mögliche Folge, wenn der elastische Bereich überschritten wird.

Der Erfindung liegt die Aufgabe zugrunde, die Nachteile des bekannten Steckverbinders, insbesondere mit der bekannten Halteklammer, vorzugsweise hinsichtlich des Widerstands gegen Leitungsdrücke, zu verringern, unter Beibehaltung einer zumindest gleichwertigen Funktion im Betrieb.

Die Aufgabe wird erfindungsgemäß durch die Merkmale des Anspruchs 1 gelöst. Dadurch, dass der Aufnahmekörper ein Widerstandselement aufweist, welches bei einer Verschiebung der Anlagefläche über den Verschiebebereich hinaus einen Widerstand gegen eine weitere elastische Verformung des Aufnahmekörpers gegen die Einsteckrichtung erzeugt, weist der Aufnahmekörper vorteilhaft zumindest zwei Verschiebebereiche auf. Die Verschiebebereiche weisen dabei unterschiedlich starke Widerstände gegen eine Verschiebung der Anlagefläche auf.

Vorteilhaft ist dabei, dass durch die elastische Verformung des Aufnahmekörpers ein elastischer Bereich zur Verfügung gestellt wird, welcher im Betrieb Druckpulsation und Druckschwankungen ausgleichen kann.

Das Widerstandselement, welches erfindungsgemäß als ein sich im Aufnahmekörper parallel zur Einsteckrichtung erstreckender Ambossarm ausgebildet ist, welcher zumindest einseitig mit dem Aufnahmekörper stoffschlüssig verbunden oder angeformt ist und mit zumindest einem Ende in einer Ambossaufnahme im Aufnahmekörper angeordnet ist, wobei zwischen einem Kontaktabschnitt an zumindest einem Ende des Ambossarms und einer korrespondierend ausgebildeten Kontaktfläche der Ambossaufnahme ein Spalt ausgebildet ist, welcher sich bei einer Verschiebung der Anlagefläche verringert und bei einem Anlagekontakt des Kontaktabschnitts mit der Kontaktfläche den Widerstand gegen eine weitere Verformung des Aufnahmekörpers gegen die Einsteckrichtung steigert, ermöglicht des Weiteren einen Schutz vor Überlastung, z. B. bei außergewöhnlich hohen Drücken im Betrieb oder einem gefrierenden Fluid, insbesondere einem im Übersteckraum gefrierenden Fluid.

Wenn der Druck im Fluidsystem ansteigt, kann mittels des Verschiebewegs schnell das Volumen für das Fluid vergrößert werden, so dass der auf den Steckverbinder wirkende Druck abnimmt. Um allerdings die Verschiebung zu begrenzen und insbesondere eine plastische Verformung zu vermeiden, begrenzt das Widerstandselement eine weitere Verschiebung der Anlagefläche, wobei durch die ermöglichte Volumenvergrößerung der restliche im Fluidsystem herrschende Druck derart reduziert ist, dass dieser nicht mehr zu einer Zerstörung des Steckverbinders oder einer plastischen Verformung desselbigen führt.

Der Aufnahmekörper ist insbesondere als ein Klammerkäfig ausgebildet. Weiterhin ist das Halteteil vorzugsweise als eine senkrecht zur Einsteckrichtung in den Klammerkäfig einsteckbare Halteklammer ausgebildet. Die Halteklammer weist dabei insbesondere ein, in Einsteckrichtung betrachtetes, U-förmiges Profil auf. Die Aufnahmeöffnung im Aufnahmekörper ist insbesondere komplementär zu der Halteklammer senkrecht zur Einsteckrichtung im Aufnahmekörper ausgebildet und insbesondere auf zwei gegenüberliegenden Seiten geöffnet.

In einer vorteilhaften Ausführungsform der Erfindung weist der Aufnahmekörper zwei parallel zur Einsteckrichtung versetzte und sich jeweils in einer Ebene senkrecht zur Einsteckrichtung erstreckende elastisch verformbare Tellerelemente auf. Insbesondere begrenzen die Tellerelemente dabei die Aufnahmeöffnung.

Zweckmäßig weist das in Einsteckrichtung betrachtete vordere Tellerelement die Anlagefläche für die Anschlagfläche des Halteteils auf.

Um die Elastizität des Aufnahmekörpers an die Druckbedingungen und den Einsatzzweck anzupassen, weist der Aufnahmekörper gemäß einer vorteilhaften Ausführung zumindest einen Dehnungssteg auf, welcher entgegen der Einsteckrichtung und insbesondere in die Einsteckrichtung elastisch verformbar ausgebildet ist. In einer vorteilhaften Variante dieser Ausführung weist der Aufnahmekörper zumindest zwei um den Einsteckkanal versetzte Dehnungsstege auf, wobei die Dehnungsstege jeweils entgegen der Einsteckrichtung elastisch verformbar ausgebildet sind.

Zweckmäßig verbinden die Dehnungsstege die Tellerelemente miteinander und sind insbesondere an einem äußeren Umfang der Tellerelemente angeordnet. Vorteilhaft sind die Tellerelemente dabei selbst elastisch verformbar, ebenso wie die Dehnungsstege, so dass über die konstruktive Gestaltung der Dehnungsstege und der Tellerelemente die elastische Verformbarkeit bzw. der Verschiebebereich des Aufnahmekörpers eingestellt werden können.

Um die Elastizität weiter zu erhöhen, weist der Aufnahmekörper gemäß einer Ausführung der Erfindung zumindest eine Materialeinsparung auf. Materialeinsparungen sind insbesondere als Einkerbungen oder Durchbrüche oder Einschnürungen oder dergleichen zu verstehen, durch welche eine homogene Struktur des Aufnahmekörpers unterbrochen wird. Vorzugsweise weist das erste und/oder das zweite Tellerelement und/oder jeweils die Dehnungsstege zumindest eine derartige Materialeinsparung auf. Insbesondere kann eine Materialeinsparung senkrecht und/oder parallel zu der Einsteckrichtung im Aufnahmekörper ausgebildet sein.

Erfindungsgemäß ist das Widerstandselement als ein sich im Aufnahmekörper parallel zur Einsteckrichtung erstreckender Ambossarm ausgebildet. Insbesondere ist der Ambossarm zumindest einseitig mit dem Aufnahmekörper stoffschlüssig verbunden oder angeformt und mit zumindest einem Ende in einer Ambossaufnahme im Aufnahmekörper angeordnet. Zweckmäßig ist zwischen einem Kontaktabschnitt an zumindest einem Ende des Ambossarms und einer korrespondierend ausgebildeten Kontaktfläche der Ambossaufnahme ein Spalt ausgebildet. Bei einer elastischen Verformung des Aufnahmekörpers im Verschiebebereich bzw. einer Verschiebung der Anlagefläche verringert sich vorteilhaft der Spalt, d. h. der Kontaktabschnitt des Ambossarms nähert sich entsprechend der Verschiebung der Anlagefläche der Kontaktfläche der Ambossaufnahme. Insbesondere steigert das Widerstandselement bei einem Anlagekontakt des Kontaktabschnitts mit der Kontaktfläche den Widerstand gegen eine weitere Verformung des Aufnahmekörpers und eine damit einhergehende Verschiebung der Anlagefläche entgegen der Einsteckrichtung. Besonders vorteilhaft kann der Spalt zwischen dem Kontaktabschnitt des Ambossarms und der Kontaktfläche der Ambossaufnahme an die elastische Verformbarkeit des Aufnahmekörpers derart angepasst werden, dass der Anlagekontakt zwischen dem Kontaktabschnitt des Ambossarms und der Kontaktfläche eintritt, insbesondere bevor die Verschiebung der Anlagefläche zu einer plastischen Verformung oder einer Zerstörung des Aufnahmekörpers führt.

Gemäß einer weiteren Ausführung ist zumindest ein Ambossarm einseitig mit dem Aufnahmekörper stoffschlüssig verbunden oder angeformt. Zweckmäßig hat der Ambossarm gegenüberliegend ein freies Ende ausgebildet. Insbesondere ist das freie Ende in der Ambossaufnahme im Aufnahmekörper angeordnet, wobei der Kontaktabschnitt als ein Überstand am freien Ende des Ambossarms ausgebildet ist.

Insbesondere ist der Ambossarm mit einem Tellerelement verbunden und erstreckt sich parallel zur Einsteckrichtung zum jeweils anderen Tellerelement. Insbesondere weist das jeweils andere Tellerelement die Ambossaufnahme auf, so dass die Tellerelemente über den Ambossarm bei einem Anlagekontakt des Überstands des freien Endes und der Kontaktfläche der Ambossaufnahme miteinander verbunden sind.

Eine weitere Ausführungsform der Erfindung sieht vor, dass der Aufnahmekörper zumindest zwei Ambossarme und zwei Ambossaufnahmen aufweist. Diese sind gemäß dieser Ausführung vorteilhaft derart ausgebildet, dass sie beim Erreichen zumindest zwei verschiedener bestimmter elastischer Verformungen des Aufnahmekörpers mit ihren jeweiligen Kontaktabschnitten nacheinander in Anlagekontakt mit ihren jeweiligen zugeordneten Kontaktflächen der Ambossaufnahmen kommen. Die verschiedenen bestimmten elastischen Verformungen des Aufnahmekörpers unterscheiden sich insbesondere über ein Ausmaß der elastischen Verschiebung der Anlagefläche des Aufnahmekörpers gegen die Einsteckrichtung. Vorteilhaft wird erreicht, das beim Erreichen jeder bestimmten elastischen Verformung des Aufnahmekörpers jeweils ein weiterer Widerstand gegen die Verschiebung der Anlagefläche des Aufnahmekörpers erzeugt wird.

Zweckmäßig weist der Steckverbinder gemäß einer weiteren Variante ein Rückstellelement auf. Vorzugsweise weist der Einsteckkanal des Aufnahmekörpers ein axiales Steckspiel zur Lagerung des zu montierenden Steckerteils auf. Das Steckspiel dient dabei insbesondere dazu, den für die Montage des zu montierenden Steckerteils vorteilhaft wirkenden Übersteckraum zu ermöglichen. Vorteilhaft wird das Steckspiel begrenzt durch einen in Einsteckrichtung betrachtet hinteren Anschlag für einen Ringbund des Steckerteils im Einsteckkanal des Aufnahmekörpers und das in Einsteckrichtung betrachtet vor dem hinteren Anschlag angeordnete Halteteil in Riegelstellung. Zweckmäßig ist das Rückstellelement zumindest teilweise in dem Aufnahmekörper angeordnet und kann eine in Einsteckrichtung auf den Ringbund des zu montierenden Steckerteils wirkende Rückstellkraft erzeugen. Vorteilhaft wird dadurch der Übersteckraum möglichst geringgehalten, so dass sich weniger Fluid, welches gefrieren und sich ausdehnen kann, im Übersteckraum ansammeln kann.

Vorteilhaft für die Herstellung des Steckverbinders sind der Aufnahmekörper und/oder das Halteteil und/oder der Grundkörper jeweils monolithisch ausgebildet und im Spritzgussverfahren hergestellt. Zweckmäßig können der Aufnahmekörper und der Grundkörper in bekannter Weise stoffschlüssig, insbesondere lasergeschweißt, miteinander verbunden sein. Weiterhin können der Aufnahmekörper und der Grundkörper in einer möglichst modularen Ausführung alternativ zu einer stoffschlüssigen Verbindung in ebenfalls bekannter Weise mit Rastelementen, insbesondere parallel zur Einsteckrichtung ausgebildeten Rastarmen, kraft- oder kraftformschlüssig miteinander verbunden sein.

Weitere vorteilhafte Ausgestaltungen der Erfindung ergeben sich aus der folgenden Figurenbeschreibung und den abhängigen Unteransprüchen.

Es zeigen:
- Fig. 1: eine Explosionsansicht einer Ausführung eines erfindungsgemäßen Steckverbinders,
- Fig. 2: eine perspektivische Ansicht auf eine gegen eine Einsteckrichtung weisende Seite einer ersten Ausführung eines Aufnahmekörpers,
- Fig. 3: eine perspektivische Schnittansicht auf eine Schnittfläche A - A gemäß Figur 2,
- Fig. 4: eine perspektivische Ansicht auf eine in die Einsteckrichtung weisende Seite der ersten Ausführung des Aufnahmekörpers,
- Fig. 5: eine perspektivische Schnittansicht auf eine Schnittfläche B - B gemäß Figur 4,
- Fig. 6: eine Aufsicht in Einsteckrichtung auf eine Ausführung des erfindungsgemäßen Steckverbinders mit einem eingesteckten Steckerteil,
- Fig. 7: eine Schnittansicht entlang C - C gemäß Figur 6,
- Fig. 8: eine Detailansicht des Bereichs D der Schnittansicht gemäß Figur 7 ohne eingestecktes Steckerteil,
- Fig. 9: eine perspektivische Ansicht auf eine gegen die Einsteckrichtung weisende Seite einer zweiten Ausführung eines Aufnahmekörpers,
- Fig. 10: eine perspektivische Schnittansicht auf eine Schnittfläche F - F gemäß Figur 9,
- Fig. 11: eine perspektivische Ansicht auf eine in die Einsteckrichtung weisende Seite der zweiten Ausführung des Aufnahmekörpers,
- Fig. 12: eine perspektivische Schnittansicht auf eine Schnittfläche G - G gemäß Figur 11,
- Fig. 13: eine perspektivische Seitenansicht einer dritten Ausführung eines Aufnahmekörpers,
- Fig. 14: eine um 90° gedrehte perspektivische Seitenansicht der dritten Ausführung des Aufnahmekörpers gemäß Figur 13,
- Fig. 15: eine Aufsicht auf eine in Einsteckrichtung weisende Seite der dritten Ausführung des Aufnahmekörpers gemäß Figur 13 und
- Fig. 16: eine perspektivische Ansicht auf eine gegen die Einsteckrichtung weisende Seite der dritten Ausführung des Aufnahmekörpers gemäß Figur 13.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

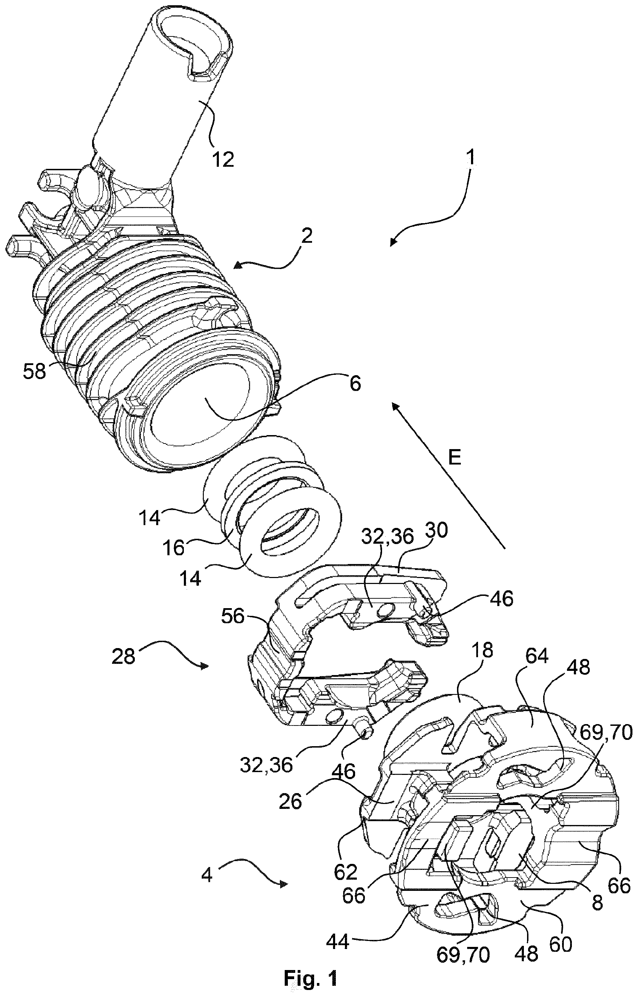

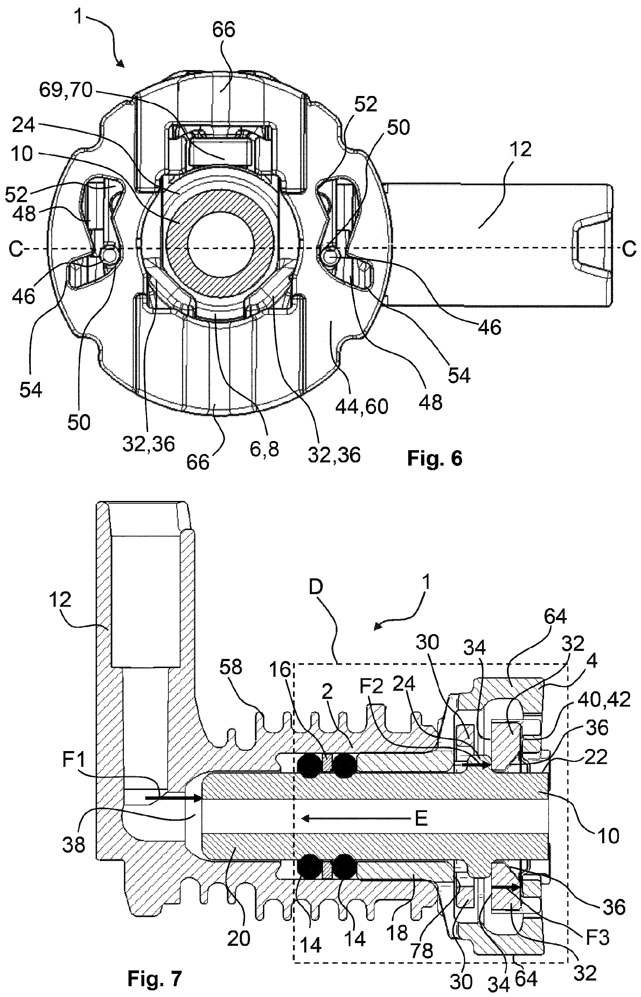

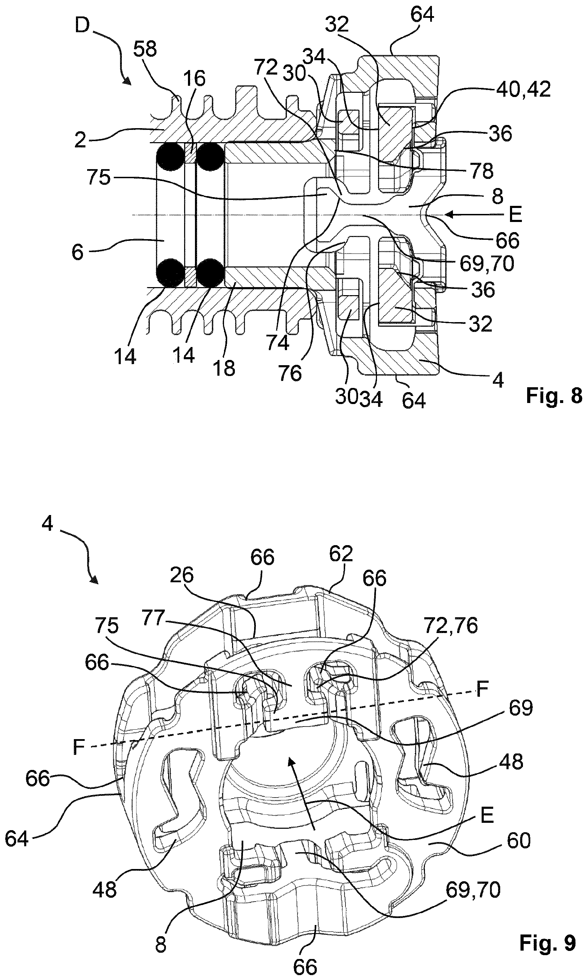

Wie in Figur 1 dargestellt, weist der Steckverbinder 1 zur Herstellung von Schlauch und/oder Rohrverbindungen einen Grundkörper 2 und einen Aufnahmekörper 4 auf. Wie in den Figuren 7 und 8 ersichtlich, weisen der Grundkörper 2 und der Aufnahmekörper 4 jeweils einen Einsteckkanal 6, 8 für ein in eine Einsteckrichtung E zu montierendes Steckerteil 10 auf. Das Steckerteil 10 ist zur Verdeutlichung in den Figuren 6 und 7 dargestellt. In den Figuren 1 bis 16 ist der Aufnahmekörper 4 in einer vorteilhaften als Klammerkäfig ausgebildeten Ausführung dargestellt.

Der Grundkörper 2 kann einseitig insbesondere mit einer nicht dargestellten Fluidleitung verbunden werden. Vorzugsweise ist dafür am Grundkörper 2, wie in den Figuren 1, 6 und 7 dargestellt, ein Anschlussabschnitt 12 ausgebildet. Eine anzuschließende Medienleitung kann insbesondere als Schlauch oder Rohr ausgebildet sein. Es kann vorgesehen sein, dass die Fluidleitung form- und/oder kraftschlüssig oder auch stoffschlüssig angebunden wird. Weiterhin kann der Grundkörper 2 unmittelbar an einem Aggregat oder einem anderen Element eines Fluidleitungssystems angeschlossen sein.

In dem Einsteckkanal 6 des Grundkörpers 2, kann ein Dichtungspaket angeordnet sein, welches vorzugsweise zwei Dichtungsringe 14, insbesondere elastomere O-Ringe, und dazwischen einen Abstandsring 16 umfasst. Vorzugsweise liegt dieses Dichtungspaket an einem in Einsteckrichtung E weisenden Verbindungsansatz 18 des Aufnahmekörpers 4 oder einem Stützring an. Die vorteilhafte Ausführung mit dem Stützring ist nicht dargestellt. Durch den Stützring, der wie der Abstandsring aus einem festeren Material als die O-Ringe besteht, wird einer Spaltextrusion der elastomeren O-Ringe entgegengewirkt. Das Dichtungspaket dichtet dabei zweckmäßig einen Außenumfang eines Dichtabschnitts des zu montierenden Steckerteils 10 nach dessen Montage gegen eine Innenwandung des Einsteckkanals 6 des Grundkörpers 2 ab.

Bei dem Steckerteil 10 handelt es sich insbesondere um einen SAE J 2044 Male-Stecker. Wie exemplarisch in der Figur 7 dargestellt, ist das Steckerteil 10 hohlzylindrisch ausgebildet und weist insbesondere den Dichtungsabschnitt 20 und einen in Einsteckrichtung E vor dem Dichtungsabschnitt 20 angeordneten Verriegelungsabschnitt 22 auf. Der Dichtungsabschnitt 20 ist in einem eingesteckten Zustand vorzugsweise vollständig im Einsteckkanal 6, 8 des Grundkörpers 2 und des Aufnahmekörpers 4 angeordnet. Insbesondere wird der Dichtungsabschnitt 20 von dem Verriegelungsabschnitt 22 durch einen im Durchmesser vergrößerten umlaufenden Ringbund 24 separiert.

Der Steckverbinder 1 weist ein in Figur 1 dargestelltes, insbesondere in der dargestellten Ausführungsform als Halteklammer ausgebildetes Halteteil 28 auf, welches, wie in den Figuren 6 bis 8 dargestellt, in einer Aufnahmeöffnung 26 des Aufnahmekörpers 4 angeordnet ist. Entsprechend der Darstellung gemäß den Figuren 6 und 7 blockiert das Halteteil 28 in einer Riegelstellung das zu montierende Steckerteil 10 entgegen der Einsteckrichtung E.

Der Aufnahmekörper 4 ist insbesondere als ein Klammerkäfig ausgebildet. Das als Halteklammer ausgebildete Halteteil 28 ist vorzugsweise senkrecht zur Einsteckrichtung E in den Klammerkäfig einsteckbar. Das als Halteklammer ausgebildete Halteteil 28 weist dabei insbesondere ein in Einsteckrichtung E betrachtet U-förmiges Profil auf. Die Aufnahmeöffnung 26 im Aufnahmekörper 4 ist insbesondere komplementär zu der Halteklammer senkrecht zur Einsteckrichtung E im Aufnahmekörper 4 ausgebildet und insbesondere auf zwei gegenüberliegenden Seiten geöffnet, insbesondere weist die Aufnahmeöffnung 26 eine Eintrittsöffnung und eine Austrittsöffnung auf.

Das Halteteil 28 ist zweckmäßig in der Aufnahmeöffnung 26 des Aufnahmekörpers 4 vormontierbar. Das als Halteklammer ausgebildete Halteteil 28 kann dabei vorzugsweise zumindest zwei Stellungen, eine Lösestellung und eine Riegelstellung, insbesondere drei Stellungen, nämlich zusätzlich eine Vormontagestellung, einnehmen. **In** den nicht dargestellten Löse- und Vormontagestellungen ist das zu montierende Steckerteil 10 durch die Halteklammer in den Einsteckkanal 6, 8 einführbar. Insbesondere zumindest in der Lösestellung ist das Steckerteil 10 gegen die Einsteckrichtung E aus dem Einsteckkanal 6, 8 entnehmbar. Vorzugsweise in der Riegelstellung verriegelt die Halteklammer, entsprechend Figur 7, das Steckerteil 10 formschlüssig, indem die Halteklammer den Ringbund 24 des Steckerteils 10 gegen eine Bewegung gegen die Einsteckrichtung E blockiert.

Das als Halteklammer ausgebildete Halteteil 28 weist insbesondere, wie in Figur 1 dargestellt, zwei Paare von Federarmen auf. Zweckmäßig besteht ein Paar der Federarme aus jeweils einem Positionsarm 30 und einem Funktionsarm 32. Insbesondere sind die Positionsarme 30 jeweils in Einsteckrichtung E gesehen hinter dem jeweiligen Funktionsarm 32 angeordnet.

Die Funktionsarme 32 und Positionsarme 30 sind dabei jeweils radial zum Einsteckkanal 6, 8 gegenüberliegend zueinander angeordnet. Vorteilhaft sind die Positionsarme 30 als Verliersicherung ausgebildet und hintergreifen in einer Vormontagestellung der Halteklammer ein Lageelement, welches in der Aufnahmeöffnung 26 ausgebildet ist.

Die Funktionsarme 32 weisen insbesondere eine vorzugsweise zum Einsteckkanal 6, 8 senkrecht ausgebildete, in Einsteckrichtung E weisende Blockierseite 34 und eine gegen die Einsteckrichtung E weisende und zumindest bereichsweise abgeschrägte Einführseite 36 auf. Die Einführseite 36 ist derart abgeschrägt, dass beim Einstecken des zu montierenden Steckerteils 10 die Einführseite 36 mit dem abgeschrägten Abschnitt in Anlagekontakt mit dem Ringbund 24 des Steckerteils 10 kommt und die Funktionsarme 32 radial zum Einsteckkanal 6, 8 nach außen elastisch verformt werden. Die Blockierseite 34 ist derart ausgebildet, dass sobald der Steckerteil 10 so weit in Einsteckrichtung E in den Einsteckkanal 6, 8 eingesteckt ist, dass der Ringbund 24 des Steckerteils 10 in Einsteckrichtung E hinter dem Funktionsarm 32 angeordnet ist, sich der Funktionsarm 32 radial zum Einsteckkanal 6, 8 rückverformt und mit der Blockierseite 34 den Ringbund 24 gegen die Einsteckrichtung E formschlüssig blockiert.

Das Steckerteil 10 wird vorteilhafterweise so weit in Einsteckrichtung E in den Einsteckkanal 6, 8 des Grundkörpers 2 und des Aufnahmekörpers 4 eingesteckt, bis der Ringbund 24 von dem Funktionsarm 32 hintergriffen wird. Bei diesem Montageverfahren ist vorzugsweise ein so genanntes Überstecken, d. h. ein im Hinblick auf die eigentliche Rastposition übermäßiges Einstecken des Steckerteils 10 in Einsteckrichtung E, um das Hintergreifen des Halteteils 28 zu ermöglichen, vorteilhaft. Diesbezüglich bildet der in Einsteckrichtung E hinterste Abschnitt des Einsteckkanals 6 des Grundkörpers 2 einen in Figur 7 dargestellten Übersteckraum 38.

Auf einer gegen die Einsteckrichtung E weisenden Stirnwand 44 des Aufnahmekörpers 4 können sich, wie in den Figuren 1 bis 3, 6, 9, 10 und 16 dargestellt, vorteilhaft Führungsschlitze zum Eingriff von komplementären, in den Figuren 1 und 6 dargestellten, Führungszapfen 46 befinden. Die Führungszapfen 46 sind an den Funktionsarmen ausgebildet und stehen von diesen gegen die Einsteckrichtung E ab.

Die Führungsschlitze sind zweckmäßig jeweils als Langlöcher 48 mit Knickwinkeln ausgebildet, wodurch die Langlöcher 48 eine Steuerkontur für die Führungszapfen 46 bilden. Durch das Zusammenwirken der Steuerkontur mit den Führungszapfen 46 wird vorteilhaft konstruktiv eine Einführbewegung und eine Ausschubbewegung des als Halteklammer ausgebildeten Halteteils 28 senkrecht zur Einsteckrichtung E begrenzt und eine Bewegung der Funktionsarme 32 radial zum Einsteckkanal 6, 8 gesteuert. Vorteilhaft kann durch die Steuerkontur zumindest eine Vormontagestellung, eine Lösestellung und eine Riegelstellung der Halteklammer in der Aufnahmeöffnung 26 eingestellt werden. In der Riegelstellung sind die Führungszapfen 46 in einer Riegelkontur 50 der Steuerkontur angeordnet, welche sich zwischen einer Vormontagekontur 52 und einer Lösekontur 54 befindet. Die Riegelkontur 50, die Steuerkontur und die Lösekontur 54 sind über das Langloch 48 miteinander verbunden.

Durch einen radialen Druck von außerhalb des Steckverbinders 1 auf einen Löseangriff 56 der Halteklammer oder von einem Druck innerhalb des Steckverbinders 1 auf die Einführseite 36 der Funktionsarme 32 beim Einstecken des zu montierenden Steckerteils 10 in den Einsteckkanal 8 des Aufnahmekörpers 4 ist die Halteklammer aus der Riegelstellung in die Lösestellung überführbar, indem die Führungszapfen 46 der Funktionsarme 32 der Steuerkontur der Langlöcher 48 folgen.

In dem Vormontagezustand sind die Führungszapfen 46 insbesondere in der Vormontagekontur 52 angeordnet. Aus der Vormontagestellung ist die Halteklammer vorteilhaft durch einen radialen Druck von außerhalb des Steckverbinders 1 auf den Löseangriff 56 der Halteklammer oder von einem Druck innerhalb des Steckverbinders 1 auf die Einführseite 36 der Funktionsarme 32 beim Einstecken des zu montierenden Steckerteils 10 in den Einsteckkanal 8 des Aufnahmekörpers 4 in die Riegelstellung überführbar, indem die Führungszapfen 46 der Funktionsarme 32 der Steuerkontur der Langlöcher 48 folgen.

Wie in den Figuren 7 und 8 dargestellt, ist der Aufnahmekörper 4 mit dem Grundkörper 2 verbunden. Weiterhin ist in den Figuren 7 und 8 dargestellt, dass das Halteteil 28 eine gegen die Einsteckrichtung E weisende Anschlagfläche 40 aufweist. Der Anschlagfläche 40 zugewandt, weist die Aufnahmeöffnung 26 eine in Einsteckrichtung E weisende Anlagefläche 42 auf. Die Anschlagfläche 40 wirkt dabei, wie in Figur 8 abgebildet, bei einer Verschiebung des Halteteils 28 entgegen der Einsteckrichtung E gegen die Anlagefläche 42 des Aufnahmekörpers 4. Der Aufnahmekörper 4 ist dabei derart elastisch verformbar ausgebildet, dass die Anlagefläche 42 zumindest innerhalb eines Verschiebebereichs entgegen der Einsteckrichtung E elastisch verschiebbar ist.

Gemäß einer nicht dargestellten Ausführung kann der Steckverbinder 1 und/oder die mit dem zu montierenden Steckerteil 10 verbundene Fluidleitung elektrisch beheizt ausgebildet sein. Vorteilhaft ist zur Beheizung des Steckverbinders 1 ein Heizmittel an dem Grundkörper 2 und/oder dem Aufnahmekörper 4 angeordnet, insbesondere um den Grundkörper 2 und/oder den Aufnahmekörper 4 gewickelt. Das Heizmittel ist vorzugsweise als elektrisches Heizmittel, insbesondere als ein ein- oder mehradriger Heizdraht bzw. Heizleiter ausgebildet.

Zweckmäßig weist der Grundkörper 2, wie in den Figuren 1, 7 und 8 dargestellt, einen Heizabschnitt auf, in dem das Heizmittel angeordnet wird. Insbesondere weist der Grundkörper 2 im Heizabschnitt zumindest ein Führungselement 58 zur Führung und Lenkung des Heizmittels auf. Das Führungselement 58 ist gemäß einer bevorzugten Ausführungsform eine wendelförmige Führungsrille, welche sich um den Umfang des Grundkörpers 2 spiralartig erstreckt.

Erfindungsgemäß weist der Aufnahmekörper 4, wie in den Figuren 1 bis 6 und 8 bis 14 dargestellt, ein Widerstandselement 69 auf. Das Widerstandselement 69 erzeugt bei einer Verschiebung der Anlagefläche 42 über den Verschiebebereich hinaus einen Widerstand gegen eine weitere elastische Verformung des Aufnahmekörpers 4 gegen die Einsteckrichtung E.

Zweckmäßig weist der Aufnahmekörper 4 aufgrund der erfindungsgemäßen Ausführung zumindest zwei Verschiebebereiche auf. Die Verschiebebereiche weisen dabei unterschiedlich starke Widerstände gegen eine Verschiebung der Anlagefläche 42 auf. Vorteilhaft ist dabei, dass durch die elastische Verformung des Aufnahmekörpers 4 ein elastischer Bereich zur Verfügung gestellt wird, welcher im Betrieb Druckpulsation und Druckschwankungen ausgleichen kann. Das Widerstandselement 69 stellt dahingehend einen Widerstandsbereich zum Schutz vor einer Überlastung, z. B. durch eine Verformung über den Verschiebebereich hinaus, zur Verfügung.

Der Verschiebebereich ist im erfindungsgemäßen Sinne keine Limitierung des elastischen Bereichs. Insbesondere kann der Aufnahmekörper 4 auch über den Verschiebebereich hinaus noch elastisch verformbar sein. Der Aufnahmekörper 4 ist jedoch durch eine Verschiebung der Anlagefläche 42 entgegen der Einsteckrichtung E innerhalb des Verschiebebereichs nicht plastisch verformbar.

Der Aufnahmekörper 4 bzw. die Anlagefläche 42 des Aufnahmekörpers 4 wird insbesondere bei außergewöhnlich hohen Drücken im Betrieb oder einem gefrierenden Fluid, insbesondere einem in einem Übersteckraum 38, dargestellt in Figur 7, gefrierenden Fluid, über den Verschiebebereich hinaus verformt.

Wenn ein Fluid im Steckverbinder 1 gefriert, dehnt sich dieses Fluid aus und vergrößert sein Volumen. Dadurch wird eine auf ein vorderes Ende des Steckerteils 10 gegen die Einsteckrichtung E wirkende Lösekraft auf das Steckerteil 10 ausgeübt, siehe erste Lösekraft F1 in Figur 7. Das Steckerteil 10 wiederum überträgt die Lösekraft durch seine formschlüssige Verbindung gegen die Einsteckrichtung E mit dem Ringbund 24 auf das Halteteil 28, insbesondere auf die Blockierseite 34 der Funktionsarme 32, siehe zweite Lösekraft F2 in Figur 7. Erfindungsgemäß ist das Halteteil 28 in der Aufnahmeöffnung 26 angeordnet und überträgt daraufhin die Lösekraft über die Anschlagfläche 40 auf die Anlagefläche 42 der Aufnahmeöffnung 26, wodurch der Aufnahmekörper 4 verformt bzw. die Anlagefläche 42 verschoben wird, siehe dritte Lösekraft F3 in Figur 7.

Wenn der Druck im Fluidsystem ansteigt, kann mittels des Verschiebewegs schnell das Volumen für das Fluid vergrößert werden, so dass der auf den Steckverbinder 1 wirkende Druck abnimmt. Um allerdings die Verschiebung zu begrenzen und insbesondere eine plastische Verformung zu vermeiden, begrenzt das Widerstandselement 69 eine weitere Verschiebung der Anlagefläche 42, wobei durch die ermöglichte Volumenvergrößerung der restliche im Fluidsystem herrschende Druck derart reduziert ist, dass dieser nicht mehr zu einer Zerstörung des Steckverbinders 1 oder einer plastischen Verformung desselbigen führt.

Insbesondere entsprechend den in den Figuren 1 bis 5, 9 bis 14 und 16 dargestellten vorteilhaften Ausführungsformen weist der Aufnahmekörper 4 zwei parallel zur Einsteckrichtung E versetzte und sich jeweils in einer Ebene senkrecht zur Einsteckrichtung E erstreckende Tellerelemente 60, 62 auf. Die Tellerelemente 60, 62 sind insbesondere elastisch verformbar und begrenzen die Aufnahmeöffnung 26. Zweckmäßig weist das in Einsteckrichtung E betrachtet vordere erste Tellerelement 60 die Anlagefläche 42 für die Anschlagfläche 40 des Halteteils 28 auf. Weiterhin weist das in Einsteckrichtung E betrachtet vordere erste Tellerelement 60 insbesondere die Steuerkontur bzw. die Langlöcher 48 zur Führung der Führungszapfen 46 der Halteklammer auf.

Gemäß einer weiteren vorteilhaften Ausführung weist der Aufnahmekörper 4 zumindest einen Dehnungssteg 64, insbesondere zwei um den Einsteckkanal 6, 8 versetzte Dehnungsstege 64, auf. Die Dehnungsstege 64 sind dabei zweckmäßig entgegen der Einsteckrichtung E und insbesondere in die Einsteckrichtung E elastisch verformbar ausgebildet.

Insbesondere die in den Figuren 1 bis 16 dargestellten vorteilhaften Ausführungsformen weisen die Dehnungsstege 64 auf. Die Dehnungsstege 64 optimieren dabei die Elastizität des Aufnahmekörpers 4 in der Art, dass die Elastizität an die Druckbedingungen und den Einsatzzweck angepasst werden kann bzw. angepasst ist. Besonders vorteilhaft beschränken die Dehnungsstege 64, wie dargestellt, die Aufnahmeöffnung 26 radial zum Einsteckkanal 6, 8 betrachtet.

In den Figuren 1 bis 5, 7 bis 14 und 16 sind zudem vorteilhafte Ausführungen dargestellt, gemäß welchen die Dehnungsstege 64 die Tellerelemente 60, 62 miteinander verbinden. Insbesondere sind die Dehnungsstege 64 dabei an einem äußeren Umfang der Tellerelemente 60, 62 angeordnet. Vorteilhaft sind die Tellerelemente 60, 62 dabei selbst elastisch verformbar, ebenso wie die Dehnungsstege 64, so dass über die konstruktive Gestaltung der Dehnungsstege 64 und der Tellerelemente 60, 62 die elastische Verformbarkeit bzw. der Verschiebebereich des Aufnahmekörpers 4 eingestellt werden kann.

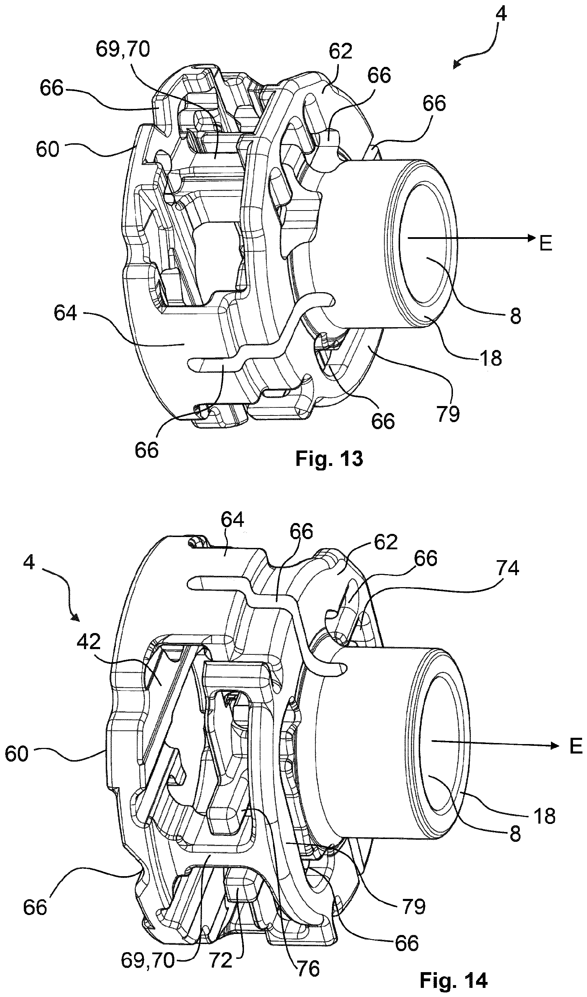

Vorteilhaft weist der Aufnahmekörper 4 zumindest eine Materialeinsparung 66 auf. Die Materialeinsparung 66 ist insbesondere als eine Einkerbung oder ein Durchbruch oder eine Einschnürung oder dergleichen ausgebildet. Die Materialeinsparung 66 erhöht die Elastizität bzw. die Verformbarkeit des Aufnahmekörpers 4 und reduziert den Widerstand entgegen der Einsteckrichtung E. Durch die Materialeinsparungen 66 wird insbesondere eine homogene Struktur des Aufnahmekörpers 4 unterbrochen. Vorzugsweise weisen das erste und/oder das zweite Tellerelement 60, 62 und/oder jeweils die Dehnungsstege 64, wie in den Figuren 9 bis 14 und 16 dargestellt, zumindest eine derartige Materialeinsparung 66 auf. Insbesondere kann eine Materialeinsparung 66 senkrecht und/oder parallel, wie in den Figuren 13 bis 16 dargestellt, zu der Einsteckrichtung E im Aufnahmekörper 4 ausgebildet sein. Besonders vorteilhaft ist bei der in den Figuren 13 bis 16 dargestellten Ausführung des Aufnahmekörpers 4 die Verbindung der Tellerelemente optimiert, um die Kraft-Weg-Kurve an mögliche Anforderungen anzupassen. Weiterhin ist vorteilhaft der Aufnahmekörper 4 durch die, zur Einsteckrichtung E parallel ausgebildeten, Materialeinsparungen 66 besonders stabil und auch einfach in der Herstellung.

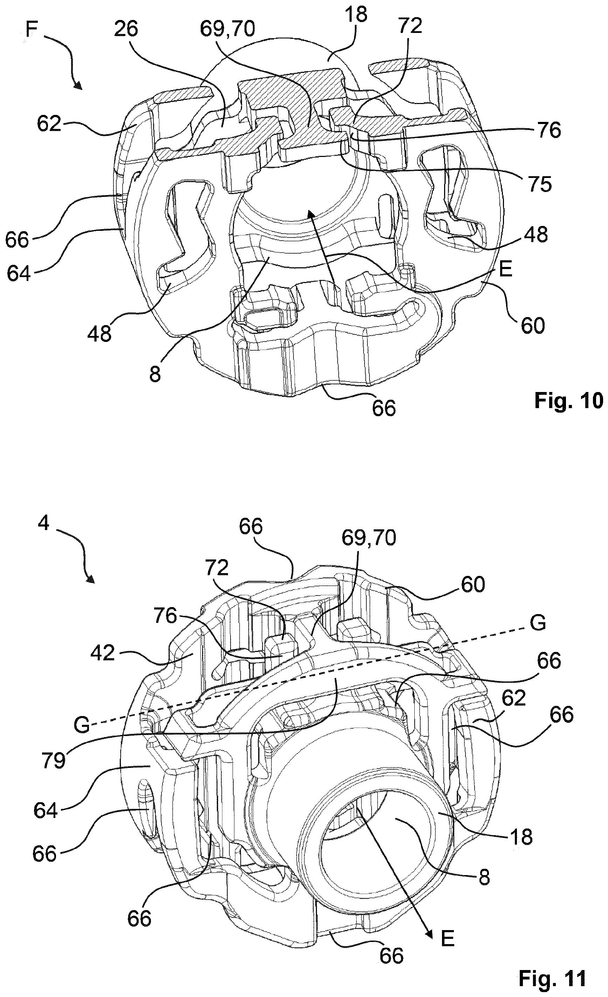

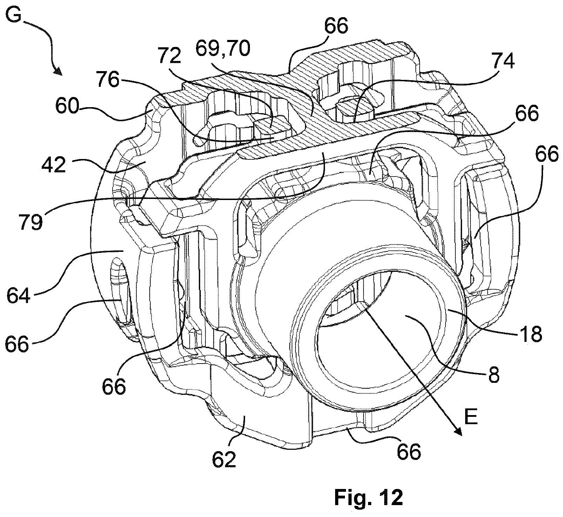

Zweckmäßig können die Materialeinsparungen auch tangential zu einer Kreisbahn um den Einsteckkanal 8 des Aufnahmekörpers ausgebildet sein, wie insbesondere in den Figuren 11 und 12 in dem zweiten Tellerelement 62 dargestellt.

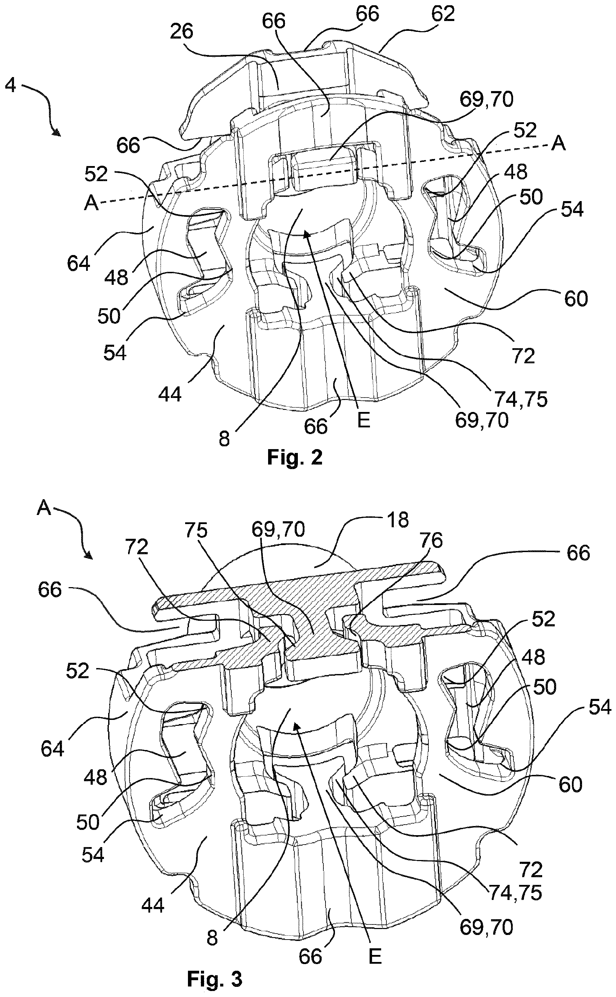

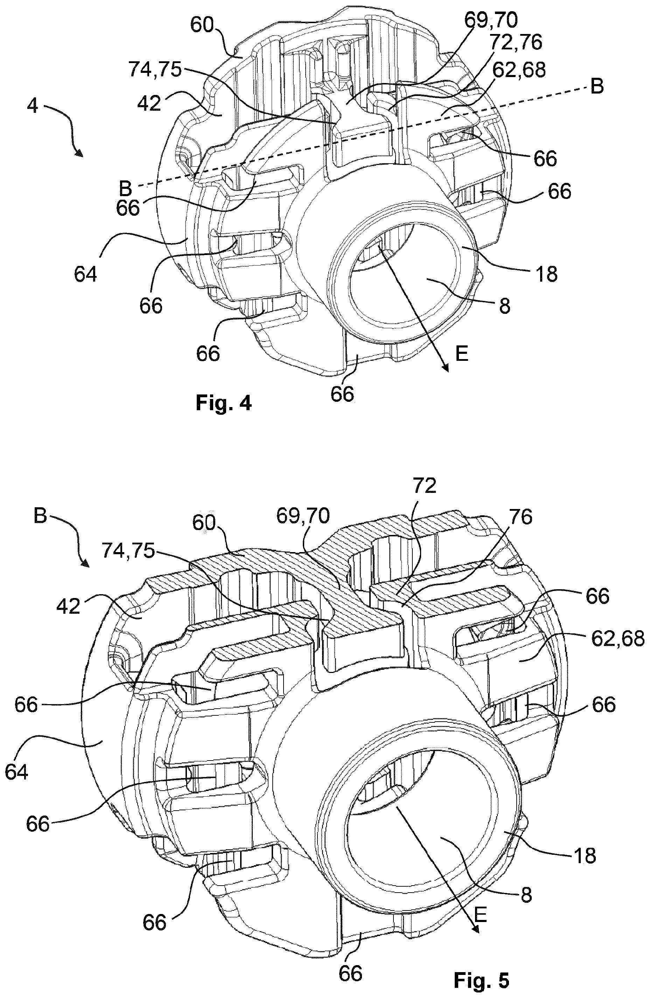

Insbesondere in den Figuren 3, 5, 6, 9 bis 12 und 16 ist eine als Einkerbung ausgebildete Materialeinsparung 66, welche an der Stirnwand 44 des ersten Tellerelements 60 oder an der in Einsteckrichtung weisenden Rückseite 68 des zweiten Tellerelements 62 ausgebildet ist, dargestellt. Weiterhin sind in den Figuren 4, 5, 11 bis 15 Materialeinsparungen 66 vorteilhaft als Durchbrüche, insbesondere Schlitze, ausgebildet, welche in dem zweiten Tellerelement 62 ausgebildet sind.

Besonders vorteilhaft ist, wie in den Figuren 9 bis 16 dargestellt, die Materialeinsparung 66 in Form von Durchbrüchen, insbesondere Freischnitte, in den Dehnungsstegen 64 ausgebildet.

Erfindungsgemäß ist das Widerstandselement 69, wie in den Figuren 1 bis 6, 8, 7 und 9 bis 14 dargestellt, als ein sich im Aufnahmekörper 4 parallel zur Einsteckrichtung E erstreckender Ambossarm 70 ausgebildet. Erfindungsgemäß ist der Ambossarm 70 einseitig mit dem Aufnahmekörper 4 stoffschlüssig verbunden oder angeformt und mit seinem freien Ende in einer Ambossaufnahme 72 im Aufnahmekörper 4 angeordnet.

Insbesondere ist, wie in Figur 8 dargestellt, der Kontaktabschnitt 74 an einem Überstand 75 an einem freien Ende des Ambossarms 70 ausgebildet. Insbesondere ist zwischen dem Kontaktabschnitt 74 des Überstands 75 und einer korrespondierend ausgebildeten Kontaktfläche 76 der Ambossaufnahme 72 ein Spalt ausgebildet. Bei einer Verformung des Aufnahmekörpers 4, insbesondere beim Verschieben der Anlagefläche 42 entgegen der Einsteckrichtung E, wird der Ambossarm 70 durch seine stoffschlüssige Verbindung mitgeschleppt, wodurch sich der Spalt verringert.

Vorteilhaft steigert das Widerstandselement 69 bei einem Anlagekontakt des Kontaktabschnitts 74, insbesondere dem Überstand 75, mit der Kontaktfläche 76 den Widerstand gegen eine weitere Verformung des Aufnahmekörpers 4 gegen die Einsteckrichtung E.

Besonders vorteilhaft kann der Spalt zwischen dem Kontaktabschnitt 74, insbesondere des Überstands 75, des Ambossarms 70 und der Kontaktfläche 76 der Ambossaufnahme 72 an die elastische Verformbarkeit des Aufnahmekörpers 4 derart angepasst werden, dass der Anlagekontakt zwischen dem Kontaktabschnitt 74 des Ambossarms 70 und der Kontaktfläche 76 eintritt, insbesondere bevor die Verschiebung der Anlagefläche 42 zu einer plastischen Verformung oder einer Zerstörung des Aufnahmekörpers 4 führt.

Entsprechend der Ausführung in den Figuren 9 bis 14 ist vorteilhaft zumindest ein Ambossarm 70 beidseitig mit den Tellerelementen 60, 62 verbunden.

Zweckmäßig ist zumindest ein beidseitig mit den Tellerelementen 60, 62 verbundener Ambossarm 70 einseitig mit einem den Kontaktabschnitt 74 bildenden Überstand 75 ausgebildet. Dabei ist das den Überstand 75 aufweisende Ende radial zum Einsteckkanal 6, 8 vorteilhaft mit einem Verbindungssteg 77 mit dem Tellerelement 60, 62 verbunden. Diese Ausführung des Ambossarms 70 ist in Figur 9 zu erkennen.

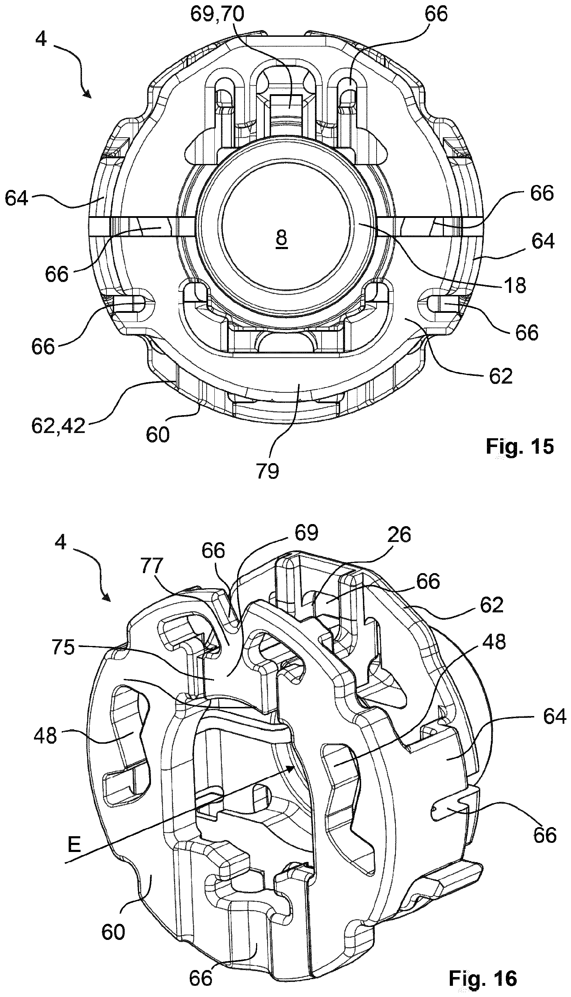

Besonders vorteilhaft sind, wie in den Figuren 9 und 16 dargestellt, in Umfangsrichtung zu dem Einsteckkanal 6, 8 betrachtet Materialeinsparungen 66 benachbart zu dem Verbindungssteg 77 in dem Tellerelement 60 ausgebildet.

Die Figuren 12 und 14 zeigen eine weitere Ausführung des Aufnahmekörpers, wobei zumindest ein beidseitig mit den Tellerelementen 60, 62 verbundener Ambossarm 70 derart mit dem Tellerelement 60, 62 verbunden ausgebildet ist, dass der Kontaktabschnitt 74 als ein Teil des Tellerelements 60, 62 selbst ausgebildet ist. Vorteilhaft geht der Ambossarm 70 gemäß dieser Ausführung beidseitig derart in die Tellerelemente 60, 62 über, dass sich der Ambossarm 70 aus einer zur Aufnahmeöffnung 26 weisenden bzw. die Aufnahmeöffnung 26 begrenzenden Oberfläche des jeweiligen Tellerelements 60, 62 heraus erstreckt. Um bei dieser Ausführung die Elastizität und die für eine Verschiebung erforderliche Kraft der Tellerelemente 60, 62 zu begünstigen, ist der Bereich des Tellerelements 60, 62, in den der Ambossarm 70 mit seinen Kontaktabschnitten 74 übergeht, als eine Dehnungsbrücke 79, wie in den Figuren 11, 12, 14 und 15 dargestellt, ausgebildet.

Vorteilhaft ist radial zur Dehnungsbrücke 79 in Richtung des Einsteckkanals 6, 8 versetzt und über den Bogenabschnitt der Dehnungsbrücke 79 eine Materialeinsparung 66 in Form eines axialen Durchbruchs in dem Tellerelement 60, 62, in den Figuren 12, 14 und 15 in dem zweiten Tellerelement 62, ausgebildet. Zweckmäßig wird bei einer axialen Verschiebung der Anlagefläche 42 die Dehnungsbrücke zusammen mit dem mit ihr verbundenen Ambossarm 70 gegen die Einsteckrichtung E verschoben.

In den Figuren 2 bis 5 und 8 ist eine weitere Ausführung der Ambossarme 70 bzw. des zumindest einen Ambossarms 70 dargestellt. Vorteilhaft ist dabei zumindest ein Ambossarm 70 einseitig mit dem Aufnahmekörper 4, insbesondere mit einem Tellerelement 60, 62, stoffschlüssig verbunden oder angeformt. Zweckmäßig ist das der stoffschlüssigen Verbindung gegenüberliegende Ende des Ambossarms 70 als ein freies Ende ausgebildet. Das freie Ende ist insbesondere, wie in Figur 5 dargestellt, in der Ambossaufnahme 72 im Aufnahmekörper 4 angeordnet. Zur Erhöhung des Widerstands gegen eine axiale Verschiebung der Anlagefläche 42 ist der Kontaktabschnitt 74 vorzugsweise als ein Überstand 75 am freien Ende des Ambossarms 70 ausgebildet. Der Überstand 75 bzw. der Kontaktabschnitt 74 ist dabei insbesondere entsprechend dem Überstand 75 bzw. dem Kontaktabschnitt 74 der Ausführung in Figur 10 ausgebildet.

Insbesondere hat zumindest eines der Tellerelemente 60, 62 zumindest einen sich parallel zur Einsteckrichtung E und zum jeweiligen anderen Tellerelements 60, 62 erstreckenden Ambossarm 70 stoffschlüssig verbunden oder angeformt. Diese Ausführung ist insbesondere in den Figuren 1 bis 6, 8 und 10 bis 14 dargestellt. Dabei ist die korrespondierende Ambossaufnahme 72 vorteilhafterweise im jeweiligen anderen Tellerelement 60, 62 angeordnet. Zweckmäßig sind die Tellerelemente 60, 62 über den Ambossarm 70 bei einem Anlagekontakt des Kontaktabschnitts 74 des Ambossarms 70 und der Kontaktfläche 76 der Ambossaufnahme 72 zur Steigerung des Widerstands gegen eine Verformung bzw. Verschiebung entgegen der Einsteckrichtung E miteinander verbunden.

Zur Justierung des Widerstands, welcher aus dem Ambossarm 70 resultiert, kann der Ambossarm 70 selbst und/oder die Ambossaufnahme 72 elastisch gegen die Einsteckrichtung E verformbar ausgebildet sein.

Vorteilhaft bildet die Ambossaufnahme 72 in dem jeweiligen Tellerelement 60, 62 eine Materialeinsparung 66, welche wiederum die Elastizität gegen die Einsteckrichtung E erhöht und den Widerstand verringert. Gemäß einer bevorzugten Ausführung ist daher radial des Einsteckkanals 6, 8 und gegenüberliegend der Ambossaufnahme 72 im Tellerelement 60, 62 jeweils eine als Einkerbung ausgebildete Materialeinsparung 66 im jeweiligen Tellerelement 60, 62 ausgebildet. Insbesondere die Figuren 1 bis 7, 9 bis 12 und 16 zeigen eine entsprechende vorteilhafte Ausführungsform.

In vorteilhafter Ausführung weist der Aufnahmekörper 4 zwei oder mehr Ambossarme 70 und entsprechende Ambossaufnahmen 72 auf. In einer vorteilhaften Ausführung weist der Aufnahmekörper 4 zwei Ambossarme 70 und zwei Ambossaufnahmen 72 auf. Die Ambossaufnahmen 72 und Ambossarme 70 sind vorzugsweise gleichmäßig um den Einsteckkanal 6, 8 verteilt angeordnet. Insbesondere sind zwei Ambossarme 70 und Ambossaufnahmen 72 diametral zum Einsteckkanal 6, 8 angeordnet.

Gemäß einer weiteren alternativen Ausführung sind die zumindest zwei Ambossarme 70 und zwei Ambossaufnahmen 72 derart ausgebildet, dass sie beim Erreichen der bestimmten Verformung des Aufnahmekörpers 4 gleichzeitig mit ihren jeweiligen Kontaktabschnitten 74 in Anlagekontakt mit ihren jeweiligen zugeordneten Kontaktflächen 76 der Ambossaufnahmen 72 kommen. Besonders vorteilhaft wird dadurch beginnend mit dem Erreichen bzw. Überschreiten des Verschiebewegs unmittelbar ein Widerstand erzeugt. Eine derartige Ausführung zeichnet sich insbesondere über zwei Widerstandsbereiche aus, vorteilhaft einen ersten Widerstandsbereich, in dem sich der Aufnahmekörper 4 bzw. dessen Verformung im Verschiebebereich befindet und einen zweiten Widerstandsbereich, ab dem Ausmaß der Verschiebung der Anlagefläche 42, an dem die Ambossarme 70 mit ihren jeweiligen Kontaktabschnitten 74 in Anlagekontakt mit ihren jeweiligen zugeordneten Kontaktflächen 76 der Ambossaufnahmen 72 kommen.

Eine weitere vorteilhafte Ausführungsform der Erfindung betrifft ebenfalls einen Aufnahmekörper 4, welcher zumindest zwei Ambossarme 70 und zwei Ambossaufnahmen 72 aufweist. Vorteilhaft sind die Ambossarme 70 und Ambossaufnahmen 72 derart ausgebildet, dass sie beim Erreichen zumindest zwei verschiedener bestimmter elastischer Verformungen des Aufnahmekörpers 4 mit ihren jeweiligen Kontaktabschnitten 74 nacheinander in Anlagekontakt mit ihren jeweiligen zugeordneten Kontaktflächen 76 der Ambossaufnahmen 72 kommen. Vorteilhaft wird erreicht, das beim Erreichen jeder bestimmten elastischen Verformung des Aufnahmekörpers 4 jeweils ein weiterer Widerstand gegen die Verschiebung der Anlagefläche 42 des Aufnahmekörpers 4 erzeugt wird, so dass der Widerstand gegen die Einsteckrichtung E stufenweise steigt. Die verschiedenen bestimmten elastischen Verformungen des Aufnahmekörpers 4 unterscheiden sich insbesondere über ein Ausmaß der elastischen Verschiebung der Anlagefläche 42 des Aufnahmekörpers 4 gegen die Einsteckrichtung E. Vorteilhaft weist ein Steckverbinder 1 dieser Art den ersten Widerstandsbereich, in dem sich der Aufnahmekörper 4 bzw. dessen Verformung im Verschiebebereich befindet, auf und weiterhin mindestens einen zweiten und dritten Widerstandsbereich, an denen die Ambossarme 70 mit ihren jeweiligen Kontaktabschnitten 74 in Anlagekontakt mit ihren jeweiligen zugeordneten Kontaktflächen 76 der Ambossaufnahmen 72 kommen.

Zweckmäßig ist zumindest ein Ambossarm 70 mit seinem freien Ende in Einsteckrichtung E weisend ausgebildet und zumindest ein Ambossarm 70 mit seinem freien Ende gegen die Einsteckrichtung E weisend ausgebildet. Diese Ausführung ist in den Figuren 1, 2 und 3 dargestellt und ermöglicht eine Anpassung der Bauteilherstellung an bestehende Werkzeugbedingungen. Gemäß der in den genannten Figuren dargestellten Ausführung ist der Ambossarm 70 an dem ersten in Einsteckrichtung E gesehen vorderen Tellerelement 60 angeordnet und erstreckt sich in die Ambossaufnahme 72 des zweiten in Einsteckrichtung E gesehen hinteren Tellerelements 62. Diametral zum Einsteckkanal 6, 8 gegenüberliegend ist der Ambossarm 70 an dem zweiten Tellerelement 62 angeordnet und erstreckt sich in die Ambossaufnahme 72 des ersten Tellerelements 60.

Gemäß einer weiteren vorteilhaften Ausführung, welche insbesondere in den Figuren 9 bis 12 dargestellt ist, ist zumindest ein beidseitig mit den Tellerelementen 60, 62 verbundener Ambossarm 70 zumindest einseitig mit dem Überstand 75 ausgebildet. Zweckmäßig ist dabei das den Überstand 75 aufweisende Ende des Ambossarms 70 radial zum Einsteckkanal 6, 8 mit dem Verbindungssteg 77 mit dem Tellerelement 60, 62 verbunden. Weiterhin ist in dieser vorteilhaften Ausführung zumindest ein weiterer beidseitig mit den Tellerelementen 60, 62 verbundener Ambossarm 70 derart mit den Tellerelementen 60, 62 verbunden ausgebildet, dass der Kontaktabschnitt 74 selbst als ein Teil des Tellerelements 60, 62 ausgebildet ist.

Vorteilhaft weist der Einsteckkanal 8 des Aufnahmekörpers 4 in einer nicht dargestellten weiteren Variante ein axiales Steckspiel zur Lagerung des zu montierenden Steckerteils 10 auf. Das Steckspiel dient insbesondere dem Überstecken des Steckerteils 10 bei dessen Montage. Das Steckspiel wird vorzugsweise begrenzt durch ein in Einsteckrichtung E betrachtet hinteren Anschlag 78 für den Ringbund 24 des Steckerteils 10 im Einsteckkanal 8 des Aufnahmekörpers 4 und das in Einsteckrichtung E betrachtet vor dem hinteren Anschlag 78 angeordnete Halteteil 28 in Riegelstellung. Zweckmäßig ist dabei ein Rückstellelement zumindest teilweise in dem Aufnahmekörper 4 angeordnet und kann eine in Einsteckrichtung E auf den Ringbund 24 des zu montierenden Steckerteils 10 wirkende Rückstellkraft erzeugen. Vorteilhaft wird dadurch der Übersteckraum 38 möglichst gering gehalten, so dass sich weniger Fluid, welches gefrieren und sich ausdehnen kann, im Übersteckraum 38 ansammeln kann.

Für eine besonders vorteilhafte Herstellung sind der Aufnahmekörper 4 und/oder das Halteteil 28 und/oder der Grundkörper 2 monolithisch ausgebildet und im Spritzgussverfahren hergestellt.

Zum Zweck einer besonders hohen Belastbarkeit sind der Aufnahmekörper 4 und der Grundkörper 2 gemäß einer vorteilhaften Ausführung stoffschlüssig, insbesondere lasergeschweißt, miteinander verbunden. Alternativ kann zwecks vereinfachter Instandsetzungen und/oder Anpassungen der Aufnahmekörper 4 und/oder der Grundkörper 2 Rast- und/oder Schraubelemente aufweisen, mit welchen der Grundkörper 2 und der Aufnahmekörper 4 miteinander verbunden sind. Insbesondere wenn der Grundkörper 2 unlösbar, z. B. mit einem Aggregat verbunden ist, ist eine vom Grundkörper 2 trennbare Ausführung des Grundkörpers 2 und Aufnahmekörpers 4 von Vorteil.

Nachfolgend ist ein Montagebeispiel bei einer vorteilhaften Ausführung eines Steckverbinders 1 mit einem Grundkörper 2 und einem Aufnahmekörper 4 beschrieben.

Zur Vormontage des Steckverbinders 1 wird zunächst das Dichtpaket in den Grundkörper 2 eingesetzt.

Anschließend wird der Aufnahmekörper 4 mit dem Grundkörper 2 zusammengeführt und insbesondere stoffschlüssig verbunden.

Danach wird das Halteteil 28, insbesondere die Halteklammer, senkrecht zur Einsteckrichtung E in die Aufnahmeöffnung 26 des Aufnahmekörpers 4 eingesetzt, so dass zunächst der Vormontagezustand entsteht, bei dem die Führungszapfen 46 der Funktionsarme 32 in die komplementären Führungsschlitze eingreifen. In der Vormontagestellung sind die Führungszapfen 46 in der Vormontagekontur 52 angeordnet und das Lageelement in der Aufnahmeöffnung 26 von den Positionsarmen hintergriffen. In diesem Zustand kann der Steckverbinder 1 ausgeliefert werden.

Alternativ, gegebenenfalls sogar bevorzugt, kann der Aufnahmekörper 4 auch schon vor dem Verbinden mit dem Grundkörper 2 mit dem Halteteil, insbesondere der Halteklammer, vormontiert werden.

Bei der späteren Endmontage wird das Steckerteil 10 in Einsteckrichtung E in den Einsteckkanal 6, 8 eingeführt. Dabei berührt der Ringbund 24 des Steckerteils 10 beim Passieren des Halteteils 28 insbesondere die Einführseite 36 der Funktionsarme 32. Vorzugsweise ist die Funktionsseite derart ausgebildet, dass die Halteklammer vor einem radialen Aufweiten der Funktionsarme 32 radial tiefer in die Aufnahmeöffnung 26 eingezogen und demzufolge radial elastisch aufgeweitet wird. Danach können die Funktionsarme 32 schließlich hinter dem Ringbund 24 einrasten und eine Bewegung des Steckerteils 10 gegen die Einsteckrichtung E mit ihrer Blockierseite 34 blockieren.

Zum Lösen der Steckverbindung wird die Halteklammer durch Drücken auf ihren Löseangriff 56 tiefer in die Aufnahmeöffnung 26 verschoben. Dadurch werden die Führungszapfen 46 in der Führungskontur der Führungsschlitze radial nach außen in die Lösekontur 54 verschoben. Folglich werden dadurch die Funktionsarme 32 aufgeweitet, so dass durch das Aufweiten der Funktionsarme 32 der Ringbund 24 wieder freigegeben wird. Die Verbindung kann nun gelöst werden, indem das Steckerteil 10 entgegen der Einsteckrichtung E aus dem Steckverbinder 1 gezogen wird.

### Bezugszeichenliste

- 1: Steckverbinder
- 2: Grundkörper
- 4: Aufnahmekörper
- 6: Einsteckkanal des Grundkörpers
- 8: Einsteckkanal des Aufnahmekörpers
- 10: Steckerteil
- 12: Anschlussabschnitt
- 14: Dichtungsring
- 16: Abstandsring
- 18: Verbindungsansatz
- 20: Dichtungsabschnitt
- 22: Verriegelungsabschnitt
- 24: Ringbund
- 26: Aufnahmeöffnung
- 28: Halteteil
- 30: Positionsarm
- 32: Funktionsarm
- 34: Blockierseite
- 36: Einführseite
- 38: Übersteckraum
- 40: Anschlagfläche
- 42: Anlagefläche
- 44: Stirnwand
- 46: Führungszapfen
- 48: Langloch
- 50: Riegelkontur
- 52: Vormontagekontur
- 54: Lösekontur
- 56: Löseangriff
- 58: Führungselement
- 60: Erstes Tellerelement
- 62: Zweites Tellerelement
- 64: Dehnungssteg
- 66: Materialeinsparung
- 68: Rückseite
- 69: Widerstandselement
- 70: Ambossarm
- 72: Ambossaufnahme
- 74: Kontaktabschnitt
- 75: Überstand
- 76: Kontaktfläche
- 77: Verbindungssteg
- 78: Anschlag
- 79: Dehnungsbrücke

- E: Einsteckrichtung
- F1: Erste Lösekraft
- F2: Zweite Lösekraft
- F3: Dritte Lösekraft

## Patentansprüche

1. Steckverbinder (1) zur Herstellung von Schlauch- und/oder Rohrverbindungen, aufweisend ein Grundkörper (2) und einen Aufnahmekörper (4), welche jeweils einen Einsteckkanal (6, 8) für ein in eine Einsteckrichtung (E) zu montierendes Steckerteil (10) aufweisen, weiterhin aufweisend ein Halteteil (28), welches in einer Aufnahmeöffnung (26) des Aufnahmekörpers (4) angeordnet ist und in einer Riegelstellung das zu montierende Steckerteil (10) entgegen der Einsteckrichtung (E) blockiert, wobei der Aufnahmekörper (4) mit dem Grundkörper (2) verbunden ist, wobei das Halteteil (28) eine gegen die Einsteckrichtung (E) weisende Anschlagfläche (40) aufweist, wobei die Aufnahmeöffnung (26) eine in Einsteckrichtung (E) weisende Anlagefläche (42) aufweist, wobei die Anschlagfläche (40) bei einer Verschiebung des Halteteils (28) entgegen der Einsteckrichtung (E) gegen die Anlagefläche (42) des Aufnahmekörpers (4) wirkt, wobei der Aufnahmekörper (4) derart elastisch verformbar ausgebildet ist, dass die Anlagefläche (42) zumindest innerhalb eines Verschiebebereichs entgegen der Einsteckrichtung (E) elastisch verschiebbar ist, wobei der Aufnahmekörper (4) ein Widerstandselement (69) aufweist, welches bei einer Verschiebung der Anlagefläche (42) über den Verschiebebereich hinaus einen Widerstand gegen eine weitere elastische Verformung des Aufnahmekörpers (4) gegen die Einsteckrichtung (E) erzeugt, indem das Widerstandselement (69) als ein sich im Aufnahmekörper (4) parallel zur Einsteckrichtung (E) erstreckender Ambossarm (70) ausgebildet ist, welcher zumindest einseitig mit dem Aufnahmekörper (4) stoffschlüssig verbunden oder angeformt ist und mit zumindest einem Ende in einer Ambossaufnahme (72) im Aufnahmekörper (4) angeordnet ist, wobei zwischen einem Kontaktabschnitt (74) an zumindest einem Ende des Ambossarms (70) und einer korrespondierend ausgebildeten Kontaktfläche (76) der Ambossaufnahme (72) ein Spalt ausgebildet ist, welcher sich bei einer Verschiebung der Anlagefläche (42) verringert und bei einem Anlagekontakt des Kontaktabschnitts (74) mit der Kontaktfläche (76) den Widerstand gegen eine weitere Verformung des Aufnahmekörpers (4) gegen die Einsteckrichtung steigert.

2. Steckverbinder (1) nach Anspruch 1,
**dadurch gekennzeichnet, dass** der Aufnahmekörper (4) zwei parallel zur Einsteckrichtung (E) versetzte und sich jeweils in einer Ebene senkrecht zur Einsteckrichtung (E) erstreckende elastisch verformbare Tellerelemente (60, 62) aufweist, wobei die Tellerelemente (60, 62) die Aufnahmeöffnung (26) begrenzen.

3. Steckverbinder (1) nach Anspruch 1 oder 2,
**dadurch gekennzeichnet, dass** der Aufnahmekörper (4) zumindest einen Dehnungssteg (64), insbesondere zwei um den Einsteckkanal (6, 8) versetzte Dehnungsstege (64), aufweist, und die Dehnungsstege (64) entgegen der Einsteckrichtung (E) elastisch verformbar ausgebildet sind, und vorzugsweise die Dehnungsstege (64) die Aufnahmeöffnung (26) radial beschränken, wobei insbesondere die Dehnungsstege (64) die Tellerelemente (60, 62) miteinander verbinden und an einem äußeren Umfang der Tellerelemente (60, 62) angeordnet sind.

4. Steckverbinder (1) nach einem der Ansprüche 1 bis 3,
**dadurch gekennzeichnet, dass** der Aufnahmekörper (4) zumindest eine Materialeinsparung (66), insbesondere eine Einkerbung und/oder einen Durchbruch aufweist, welche die Elastizität des Aufnahmekörpers (4) erhöhen.

5. Steckverbinder (1) nach einem der Ansprüche 1 bis 4,
**dadurch gekennzeichnet, dass** zumindest ein Ambossarm (70) beidseitig mit den Tellerelementen (60, 62) verbunden ist, wobei insbesondere zumindest ein beidseitig mit den Tellerelementen (60, 62) verbundener Ambossarm (70) einseitig mit einem den Kontaktabschnitt (74) bildenden Überstand (75) ausgebildet ist, wobei das den Überstand (75) aufweisende Ende radial zum Einsteckkanal (6, 8) mit einem Verbindungssteg (77) mit dem Tellerelement (60, 62) verbunden ist.

6. Steckverbinder (1) nach Anspruch 5,
**dadurch gekennzeichnet, dass** zumindest ein beidseitig mit den Tellerelementen (60, 62) verbundener Ambossarm (70) derart mit dem Tellerelement (60, 62) verbunden ausgebildet ist, dass der Kontaktabschnitt (74) als ein Teil des Tellerelements (60, 62) selbst ausgebildet ist.

7. Steckverbinder (1) nach einem der Ansprüche 1 bis 6,
**dadurch gekennzeichnet, dass** zumindest ein Ambossarm (70) einseitig mit dem Aufnahmekörper (4) stoffschlüssig verbunden oder angeformt ist und gegenüberliegend ein freies Ende ausgebildet hat, welches in der Ambossaufnahme (72) im Aufnahmekörper (4) angeordnet ist, wobei der Kontaktabschnitt (74) als ein Überstand (75) am freien Ende des Ambossarms (70) ausgebildet ist.

8. Steckverbinder (1) nach einem der Ansprüche 1 bis 7,
**dadurch gekennzeichnet, dass** zumindest eines der Tellerelemente (60, 62) zumindest einen sich parallel zur Einsteckrichtung (E) und zum jeweiligen anderen Tellerelement (60, 62) erstreckenden Ambossarm (70) stoffschlüssig verbunden oder angeformt hat und die korrespondierende Ambossaufnahme (72) im jeweiligen anderen Tellerelement (60, 62) angeordnet ist.

9. Steckverbinder (1) nach einem der Ansprüche 1 bis 8,
**dadurch gekennzeichnet, dass** der Aufnahmekörper (4) zwei oder mehr Ambossarme (70) und entsprechende Ambossaufnahmen (72) aufweist, welche gleichmäßig um den Einsteckkanal (6, 8) verteilt angeordnet sind, insbesondere zwei Ambossarme (70) und Ambossaufnahmen (72), welche diametral zum Einsteckkanal (6, 8) angeordnet sind, wobei insbesondere die zumindest zwei Ambossarme (70) und zwei Ambossaufnahmen (72) derart ausgebildet sind, dass sie beim Erreichen der bestimmten Verformung des Aufnahmekörpers (4) gleichzeitig mit ihren jeweiligen Kontaktabschnitten (74) in Anlagekontakt mit ihren jeweiligen zugeordneten Kontaktflächen (76) der Ambossaufnahmen (72) kommen.

10. Steckverbinder (1) nach Anspruch 9,
**dadurch gekennzeichnet, dass** die Ambossarme (70) und Ambossaufnahmen (72) derart ausgebildet sind, dass sie beim Erreichen zumindest zwei verschiedener bestimmter Verformungen des Aufnahmekörpers (4), welche sich über ein Ausmaß der Verschiebung der Anlagefläche (42) des Aufnahmekörpers (4) gegen die Einsteckrichtung (E) unterscheiden, nacheinander mit ihren jeweiligen Kontaktabschnitten (74) in Anlagekontakt mit ihren jeweiligen zugeordneten Kontaktflächen (76) der Ambossaufnahmen (72) kommen, so dass mit dem Erreichen jeder bestimmten elastischen Verformung des Aufnahmekörpers (4) jeweils ein weiterer Widerstand gegen die Verschiebung der Anlagefläche (42) des Aufnahmekörpers erzeugt wird, wobei insbesondere zumindest ein Ambossarm (70) mit seinem freien Ende in Einsteckrichtung (E) weisend ausgebildet ist und zumindest ein Ambossarm (70) mit seinem freien Ende gegen die Einsteckrichtung (E) weisend ausgebildet ist.

11. Steckverbinder (1) nach einem der Ansprüche 1 bis 10,
**dadurch gekennzeichnet, dass** zumindest ein beidseitig mit den Tellerelementen (60, 62) verbundener Ambossarm (70) zumindest einseitig mit dem Überstand (75) ausgebildet ist, wobei das den Überstand (75) aufweisende Ende radial zum Einsteckkanal (6, 8) mit dem Verbindungssteg (77) mit dem Tellerelement (60, 62) verbunden ist und zumindest ein weiterer beidseitig mit den Tellerelementen (60, 62) verbundener Ambossarm (70) derart mit den Tellerelementen (60,62) verbunden ausgebildet ist, dass der Kontaktabschnitt (74) selbst als ein Teil des Tellerelements (60, 62) ausgebildet ist.

12. Steckverbinder (1) nach einem der Ansprüche 1 bis 11,
**dadurch gekennzeichnet, dass** der Einsteckkanal (8) des Aufnahmekörpers (4) ein axiales Steckspiel zur Lagerung des zu montierenden Steckerteils (10) aufweist, wobei das Steckspiel begrenzt wird durch einen in Einsteckrichtung (E) betrachtet hinteren Anschlag (78) für einen Ringbund (24) des Steckerteils (10) im Einsteckkanal (8) des Aufnahmekörpers (4) und das in Einsteckrichtung (E) betrachtet vor dem hinteren Anschlag (78) angeordnete Halteteil (28) in Riegelstellung, wobei ein Rückstellelement zumindest teilweise in dem Aufnahmekörper (4) angeordnet ist und eine in Einsteckrichtung (E) auf den Ringbund (24) des zu montierenden Steckerteils (10) wirkende Rückstellkraft erzeugen kann.

13. Steckverbinder (1) nach einem der Ansprüche 1 bis 12,
**dadurch gekennzeichnet, dass** der Aufnahmekörper (4) und/oder das Halteteil (28) und/oder der Grundkörper (2) monolithisch ausgebildet und im Spritzgussverfahren hergestellt sind.

14. Steckverbinder (1) nach einem der Ansprüche 1 bis 13,
**dadurch gekennzeichnet, dass** der Aufnahmekörper (4) und der Grundkörper (2) stoffschlüssig, insbesondere lasergeschweißt, miteinander verbunden sind.

## Claims

1. A plug connector (1) for the producing of hose- and/or tube-connections, including a base body (2) and a receiving body (4), which each include a plug-in channel (6, 8) for a plug part (10) to be installed in a plug-in direction (E), furthermore including a retaining part (28), which is disposed in a receiving opening (26) of the receiving body (4) and, in a locking position, block the to-be-installed plug part (10) against the plug-in direction (E), wherein the receiving body (4) is connected to the base body (2), wherein the retaining part (28) includes a stop surface (40) facing against the plug-in direction (E),
wherein the receiving opening (26) includes an abutment surface (42) facing in the plug-in direction (E), wherein with a displacing of the retaining part (28) against the plug-in direction (E), the stop surface (40) acts against the abutment surface (42) of the receiving body (4), wherein the receiving body (4) is designed to be elastically deformable such that the abutment surface (42) is elastically displaceable against the plug-in direction (E) at least inside a displacing region,
wherein the receiving body (4) includes a resistance element (69) which, during a displacing of the abutment surface (42) beyond the displacing region, generates a resistance against a further elastic deforming of the receiving body (4) against the plug-in direction (E),
wherein the resistance element (69) is configured as an anvil arm (70) extending in the receiving body (4) parallel to the plug-in direction (E), which is connected or formed-on in a material-bonded manner at least one-side with the receiving body (4), and is disposed with at least one end in an anvil receptacle (72) in the receiving body (4), wherein between a contact section (74) on at least one end of the anvil arm (70) and a correspondingly configured contact surface (76) of the anvil receptacle (72) a gap is formed that decreases with a displacing of the abutment surface (42), and with an abutment contact of the contact section (74) with the contact surface (76) increases the resistance against a further deforming of the receiving body (4) against the plug-in direction.

2. The plug connector (1) according to claim 1,
**characterized in that** the receiving body (4) includes two elastically deformable plate elements (60, 62) offset parallel to the plug-in direction (E) and each extending in a plane perpendicular to the plug-in direction (E), wherein the plate elements (60, 62) delimit the receiving opening (26).

3. The plug connector (1) according to claim 1 or 2,
**characterized in that** the receiving body (4) includes at least one expansion crosspiece (64), in particular two expansion crosspieces (64), displaced around the plug-in channel (6, 8), and the expansion crosspieces (64) are configured elastically deformable against the plug-in direction (E), and preferably the expansion crosspieces (64) radially restrict the receiving opening (26), wherein in particular the expansion crosspieces (64) connect the plate elements (60, 62) to each other and are disposed on an outer circumference of the plate elements (60, 62).

4. The plug connector (1) according to claim 1 to 3,
**characterized in that** the receiving body (4) includes at least one material take-out (66), in particular a notch and/or an opening, that increases the elasticity of the receiving body (4).

5. The plug connector (1) according to claim 1 to 4,
**characterized in that** at least one anvil arm (70) is connected to the plate elements (60, 62) on both sides, wherein at least one anvil arm (70) connected on both sides with the plate elements (60, 62) is configured one-side with a protrusion (75) forming the contact section (74), wherein the end including the protrusion (75) is connected radially to the plug-in channel (6, 8) by a connecting crosspiece (77) to the plate element (60, 62).

6. The plug connector (1) according to claim 5,
**characterized in that** at least one anvil arm (70) connected to the plate elements (60, 62) on both sides is configured connected to the plate element (60, 62) such that the contact section (74) is configured as a part of the plate element (60, 62) itself.

7. The plug connector (1) according to claim 1 to 6,
**characterized in that** at least one anvil arm (70) is connected or formed-on in a material-bonded manner on one side with the receiving body (4) and has a free opposite end, which is disposed in the anvil receptacle (72) in the receiving body (4), wherein the contact section (74) is configured as a protrusion (75) on the free end of the anvil arm (70).

8. The plug connector (1) according to claim 1 to 7,
**characterized in that** at least one of the plate elements (60, 62) has at least one anvil arm (70), connected or formed-on in a material-bonded manner, extending parallel to the plug-in direction (E) and to the respective other plate element (60, 62), and the corresponding anvil receptacle (72) is disposed in the respective other plate element (60, 62).

9. The plug connector (1) according to claim 1 to 8,
**characterized in that** the receiving body (4) includes two or more anvil arms (70) and corresponding anvil receptacles (72) that are disposed distributed uniformly about the plug-in channel (6, 8), in particular two anvil arms (70) and anvil receptacles (72) that are disposed diametrically with respect to the plug-in channel (6, 8), wherein in particular the at least two anvil arms (70) and two anvil receptacles (72) are configured such that with the achieving of the specific deformation of the receiving body (4), they simultaneously come into abutment contact by their respective contact section (74) with their respective associated contact surfaces (76) of the anvil receptacles (72).

10. The plug connector (1) according to claim 9,
**characterized in that** the anvil arms (70) and anvil receptacles (72) are configured such upon achieving at least two different specific deformations of the receiving body (4) that differ by an extent of the displacing of the abutment surface (42) of the receiving body (4) against the plug-in direction (E), they successively come into abutment contact by their respective contact sections (74) with their respective associated contact surfaces (76) of the anvil receptacles (72), so that with the achieving of each specific elastic deformation of the receiving body (4) a further resistance is respectively generated against the displacing of the abutment surface (42) of the receiving body, wherein in particular at least one anvil arm (70) is configured with its free end pointing in plug-in direction (E), and at least one anvil arm (70) is configured with its free end pointing against the plug-in direction (E).

11. The plug connector (1) according to claim 1 to 10,
**characterized in that** at least one anvil arm (70) connected on both sides to the plate elements (60, 62) is configured at least one-side with the protrusion (75) wherein the end, radially with respect to the plug-in channel (6, 8), including the protrusion (75) is connected by the connecting crosspiece (77) to the plate element (60, 62), and at least one further anvil arm (70) connected on both sides to the plate elements (60, 62) is configured connected to the plate elements (60, 62) such that the contact section (74) itself is configured as a part of the plate element (60, 62).

12. The plug connector (1) according to claim 1 to 11,
**characterized in that** the plug-in channel (8) of the receiving body (4) has an axial plug clearance for the supporting of the plug part (10) to be installed, wherein the plug clearance is limited by a rearmost, as viewed in the plug-in direction (E), stop (78) for an annular bead (24) of the plug part (10) in the plug-in channel (8) of the receiving body (4), and the retaining part (28), disposed in front of the rearmost stop (78) as viewed in the plug-in direction (E) in locked position, wherein a return element is disposed at least partially in the receiving body (4), and can generate a return force in plug-in direction (E) on the annular bead (24) of the plug part (10) to be installed.

13. The plug connector (1) according to claim 1 to 12,
**characterized in that** the receiving body (4) and/or the retaining part (28) and/or the base body (2) are configured monolithically and manufactured by injection molding.

14. The plug connector (1) according to claim 1 to 13,
**characterized in that** the receiving body (4) and the base body (2) are connected to each other in a material-bonded manner, in particular laser welded.

## Revendications

1. Connecteur enfichable (1) pour la fabrication de connexions de tuyaux et/ou de tubes, présentant un corps de base (2) et un corps de réception (4), qui présentent chacun un canal d'enfichage (6, 8) pour une partie de connecteur (10) à monter dans une direction d'enfichage (E), présentant en outre une pièce de retenue (28) qui est agencée dans une ouverture de réception (26) du corps de réception (4) et qui, dans une position de verrouillage, bloque la partie de connecteur (10) à monter à l'encontre de la direction d'enfichage (E), le corps de réception (4) étant relié au corps de base (2), la pièce de retenue (28) présentant une surface de butée (40) orientée à l'encontre de la direction d'enfichage (E), l'ouverture de réception (26) présentant une surface d'appui (42) orientée dans la direction d'enfichage (E), la surface de butée (40) agissant contre la surface d'appui (42) du corps de réception (4) lors d'un déplacement de la pièce de retenue (28) à l'encontre de la direction d'enfichage (E), le corps de réception (4) étant réalisé de manière à pouvoir être déformé élastiquement de telle sorte que la surface d'appui (42) puisse être déplacée élastiquement à l'encontre de la direction d'enfichage (E) au moins à l'intérieur d'une zone de déplacement, le corps de réception (4) présentant un élément de résistance (69) qui, lors d'un déplacement de la surface d'appui (42) au-delà de la zone de déplacement, produit une résistance contre une déformation élastique supplémentaire du corps de réception (4) à l'encontre de la direction d'enfichage(E), par le fait que l'élément de résistance (69) est réalisé sous la forme d'un bras d'enclume (70) s'étendant dans le corps de réception (4) parallèlement à la direction d'enfichage (E), qui est relié au moins d'un côté au corps de réception (4) par liaison de matière ou formé sur celui-ci et qui est agencé avec au moins une extrémité dans un logement d'enclume (72) dans le corps de réception (4), une fente étant réalisée entre une section de contact (74) à au moins une extrémité du bras d'enclume (70) et une surface de contact (76) réalisée de manière correspondante du logement d'enclume (72), laquelle fente diminue lors d'un déplacement de la surface d'appui (42) et, lors d'un contact d'appui de la section de contact (74) avec la surface de contact (76), augmente la résistance contre une déformation supplémentaire du corps de réception (4) à l'encontre de la direction d'enfichage.

2. Connecteur enfichable (1) selon la revendication 1, **caractérisé en ce que** le corps de réception (4) présente deux éléments de plateau (60, 62) déformables élastiquement, décalés parallèlement à la direction d'enfichage (E) et s'étendant chacun dans un plan perpendiculaire à la direction d'enfichage (E), les éléments de plateau (60, 62) délimitant l'ouverture de réception (26).

3. Connecteur enfichable (1) selon la revendication 1 ou 2,
**caractérisé en ce que** le corps de réception (4) présente au moins une nervure de dilatation (64), notamment deux nervures de dilatation (64) décalées autour du canal d'enfichage (6, 8), et les nervures de dilatation (64) sont réalisées de manière à pouvoir être déformées élastiquement à l'encontre de la direction d'enfichage (E), et de préférence les nervures de dilatation (64) limitent radialement l'ouverture de réception (26), les nervures de dilatation (64) reliant notamment les éléments de plateau (60, 62) entre eux et étant agencées sur une périphérie extérieure des éléments de plateau (60, 62).

4. Connecteur enfichable (1) selon l'une quelconque des revendications 1 à 3,
**caractérisé en ce que** le corps de réception (4) présente au moins un évidement de matériau (66), notamment une entaille et/ou une percée, qui augmentent l'élasticité du corps de réception (4).

5. Connecteur enfichable (1) selon l'une quelconque des revendications 1 à 4,
**caractérisé en ce qu'**au moins un bras d'enclume (70) est relié des deux côtés aux éléments de plateau (60, 62), au moins un bras d'enclume (70) relié des deux côtés aux éléments de plateau (60, 62) étant notamment réalisé d'un côté avec une saillie (75) formant la section de contact (74), l'extrémité présentant la saillie (75) étant reliée radialement par rapport au canal d'enfichage (6, 8) à l'élément de plateau (60, 62) avec une nervure de liaison (77).

6. Connecteur enfichable (1) selon la revendication 5, **caractérisé en ce qu'**au moins un bras d'enclume (70) relié des deux côtés aux éléments de plateau (60, 62) est réalisé de manière à être relié à l'élément de plateau (60, 62) de telle sorte que la section de contact (74) est réalisée comme une partie de l'élément de plateau (60, 62) lui-même.

7. Connecteur enfichable (1) selon l'une quelconque des revendications 1 à 6,
**caractérisé en ce qu'**au moins un bras d'enclume (70) est relié d'un seul côté au corps de réception (4) par liaison de matière ou formé sur celui-ci et a réalisé à l'opposé une extrémité libre qui est agencée dans le logement d'enclume (72) dans le corps de réception (4), la section de contact (74) étant réalisée comme une saillie (75) à l'extrémité libre du bras d'enclume (70).

8. Connecteur enfichable (1) selon l'une quelconque des revendications 1 à 7,
**caractérisé en ce qu'**au moins l'un des éléments de plateau (60, 62) a au moins un bras d'enclume (70) relié par liaison de matière ou formé sur celui-ci, qui s'étend parallèlement à la direction d'enfichage (E) et à l'autre élément de plateau (60, 62) respectif, et le logement d'enclume (72) correspondant est agencé dans l'autre élément de plateau (60, 62) respectif.

9. Connecteur enfichable (1) selon l'une quelconque des revendications 1 à 8,
**caractérisé en ce que** le corps de réception (4) présente deux bras d'enclume (70) ou plus et des logements d'enclume (72) correspondants, qui sont agencés en étant répartis régulièrement autour du canal d'enfichage (6, 8), notamment deux bras d'enclume (70) et logements d'enclume (72) qui sont agencés diamétralement par rapport au canal d'enfichage (6, 8), les au moins deux bras d'enclume (70) et deux logements d'enclume (72) étant notamment réalisés de telle sorte que, lorsque le corps de réception (4) atteint la déformation déterminée, ils viennent simultanément en contact d'appui avec leurs sections de contact (74) respectives avec leurs surfaces de contact (76) associées respectives des logements d'enclume (72).

10. Connecteur enfichable (1) selon la revendication 9, **caractérisé en ce que** les bras d'enclume (70) et les logements d'enclume (72) sont réalisés de telle sorte que, lorsque l'on atteint au moins deux déformations déterminées différentes du corps de réception (4), qui se distinguent par une ampleur du déplacement de la surface d'appui (42) du corps de réception (4) à l'encontre de la direction d'enfichage (E), ils viennent successivement avec leurs sections de contact respectives (74) en contact d'appui avec leurs surfaces de contact associées respectives (76) des logements d'enclume (72), de telle sorte qu'en atteignant chaque déformation élastique déterminée du corps de réception (4), une résistance supplémentaire contre le déplacement de la surface d'appui (42) du corps de réception est produite à chaque fois, au moins un bras d'enclume (70) étant notamment réalisé avec son extrémité libre dirigée dans la direction d'enfichage (E) et au moins un bras d'enclume (70) étant réalisé avec son extrémité libre dirigée à l'encontre de la direction d'enfichage (E).

11. Connecteur enfichable (1) selon l'une quelconque des revendications 1 à 10,
**caractérisé en ce qu'**au moins un bras d'enclume (70) relié des deux côtés aux éléments de plateau (60, 62) est réalisé au moins d'un côté avec la saillie (75), l'extrémité présentant la saillie (75) étant reliée radialement par rapport au canal d'enfichage (6, 8) avec la nervure de liaison (77) à l'élément de plateau (60, 62), et au moins un autre bras d'enclume (70) relié des deux côtés aux éléments de plateau (60, 62) étant réalisé en étant relié aux éléments de plateau (60, 62) de telle sorte que la section de contact (74) elle-même est réalisée comme une partie de l'élément de plateau (60, 62).

12. Connecteur enfichable (1) selon l'une quelconque des revendications 1 à 11,
**caractérisé en ce que** le canal d'enfichage (8) du corps de réception (4) présente un jeu d'enfichage axial pour le logement de la partie de connecteur (10) à monter, le jeu d'enfichage étant limité par une butée arrière (78), considérée dans la direction d'enfichage (E), pour un collet annulaire (24) de la partie de connecteur (10) dans le canal d'enfichage (8) du corps de réception (4) et la partie de retenue (28) en position de verrouillage, agencée devant la butée arrière (78), considérée dans la direction d'enfichage (E), un élément de rappel étant agencé au moins partiellement dans le corps de réception (4) et pouvant produire une force de rappel agissant dans la direction d'enfichage (E) sur le collet annulaire (24) de la partie de connecteur (10) à monter.

13. Connecteur enfichable (1) selon l'une quelconque des revendications 1 à 12,
**caractérisé en ce que** le corps de réception (4) et/ou la pièce de retenue (28) et/ou le corps de base (2) sont réalisés de manière monolithique et fabriqués par le procédé de moulage par injection.

14. Connecteur enfichable (1) selon l'une quelconque des revendications 1 à 13,
**caractérisé en ce que** le corps de réception (4) et le corps de base (2) sont reliés entre eux par une liaison de matière, notamment par soudage au laser.
